# EUROPEAN PATENT SPECIFICATION

(11) **EP 4 187 642 B1**
(45) Date of publication and mention of the grant of the patent: **23.09.2026**
(21) Application number: 22855033.1
(22) Date of filing: 25.05.2022
(51) Int. Cl.: H01M 4/134, H01M 4/38, H01M 4/583, H01M 4/02, H01M 4/131, H01M 4/133, H01M 4/36, H01M 4/62, H01M 10/052

(54) **ANODE MATERIAL AND PREPARATION METHOD THEREOF, LITHIUM ION BATTERY**
ANODENMATERIAL UND HERSTELLUNGSVERFAHREN DAFÜR, LITHIUM-IONEN-BATTERIE
MATÉRIAU D'ANODE ET SON PROCÉDÉ DE PRÉPARATION, ET BATTERIE AU LITHIUM-ION

(30) Priority: 12.08.2021 CN 202110924294
(43) Date of publication of application: 31.05.2023
(60) Divisional application: 26186705.5 / 4 787 520
(73) Proprietor: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: HE, Peng, Shenzhen, Guangdong 518106 (CN); XIAO, Chengmao, Shenzhen, Guangdong 518106 (CN); GUO, Eming, Shenzhen, Guangdong 518106 (CN); REN, Jianguo, Shenzhen, Guangdong 518106 (CN); HE, Xueqin, Shenzhen, Guangdong 518106 (CN)
(74) Representative: Noréns Patentbyrå AB
(86) International application number: PCT/CN2022/094963
(87) International publication number: WO 2023/016047

(56) References cited:
- EP-A1- 3 444 876
- WO-A1-2016/159878
- CN-A- 105 047 894
- CN-A- 107 210 431
- CN-A- 109 256 544
- CN-A- 109 994 717
- CN-A- 110 504 428
- CN-A- 112 768 679
- CN-A- 113 066 970
- CN-A- 114 051 663
- CN-A- 114 678 512
- US-A1- 2015 343 428

## Description

### TECHNICAL FIELD

The present application relates to the field of anode material, and in particular, to anode material and preparation method thereof, lithium ion battery.

### BACKGROUND

In recent years, lithium ion battery is widely used in electric vehicles and consumer electronics products due to the advantages of high energy density, high output power, long cycle life, and little environmental pollution. For example, silicon carbon anode material have been partially applied in the field of power battery, but the anode initial efficiency is required to be high in full cell applications. The initial efficiency of the current graphite anode is generally 93% or more, and the initial efficiency of the silicon anode material is usually 80% to 85%, which result a poor performance of anode capacity per gram in the design of finished battery. There is a need of manners to improve the initial efficiency, such as a technique of anode pre-lithiation, etc. But the existing lithium supplementation means are complex, hazardous, and require high demand for the device, and requiring other methods for improving the initial efficiency of the silicon-based material, thus limiting further application of the silicon anode.

Therefore, how to increase the initial efficiency while simplifying the process and reducing costs is a problem to be solved at present.

Prior art document WO2016/159878A1, forming the basis of the preamble of claim 1, discloses materials composed of a porous carbon substrate with a 3D-nanostructure backbone, further containing an active nanomaterial suitable for use in the manufacture of an anode or a cathode; and methods of manufacturing said materials, which make use of the agglomeration of a protein/polypeptide to form a 3D-framework throughout which the active material is homogeneously distributed before said protein/polypeptide is carbonized.

Prior art document EP3444876A1 discloses a silicon negative material, a silicon negative material preparation method, a negative electrode plate, and a lithium-ion battery. The silicon negative material includes a silicon core, and a buffer coating layer and a first coating layer that are coated on a surface of the silicon core, where the first coating layer is a coating layer including a carbon material, and the carbon material includes at least one of the following doping elements: N, P, B, S, O, F, Cl, or H.

Prior art document CN113066970A discloses a silicon-carbon negative electrode material, an electrochemical device and an electronic device. The silicon-carbon negative electrode material comprises a silicon-carbon compound and a coating layer located on at least one part of the surface of the silicon-carbon compound, wherein the coating layer comprises carbon nitride and carbon nanotube. The silicon-carbon negative electrode material, as a lithium ion battery negative electrode material, can improve the cycle life and the cycle structure stability.

### SUMMARY

The present application, in order to overcome the deficiencies described above, provides an anode material and a preparation method thereof, a lithium ion battery, facilitating increasing the initial efficiency of the anode material, and the preparation method may simplify the process and reduce preparation costs.

In a first aspect, an embodiment of the present application provide an anode material according to claim 1.

In a second aspect, the present application provides a preparation method of anode material according to claim 9.

In a third aspect, the present application provides a lithium ion battery according to claim 14.

The technical solutions of the present application have at least the following beneficial effects: the addition of the dopant element may promote bonding of the carbon material to the active material, and furthermore the degree of graphitization of the carbon material may be increased, thereby improving conductivity. The induction of the dopant element in the carbon material generates an active site with high activity and selectivity. The active site in one aspect is more easily combined with surface of the active material to form more firm connection; on the other hand, as the activity increasing, the energy barrier decreases, the rearrangement resistance of the carbon atoms decreases, the ordered arrangement is more easily formed during the high temperature heat treatment, it appears that order in local short range increase, and the degree of graphitization is partly increased.

The preparation method provided by the present application is simple in operation, can be applied to large-scale the production. The prepared anode material can effectively improve the stability of the lithium ion battery discharge and discharge cycles, and effectively reduce the rate of expansion of the anode material.

### BRIEF DESCRIPTION OF DRAWINGS

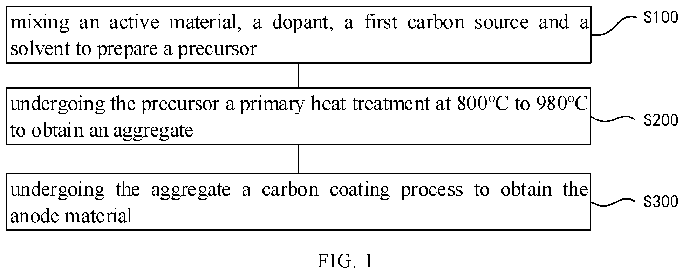

FIG. 1 is a flowchart of preparation method of anode material according to an embodiment.

### DESCRIPTION OF EMBODIMENT

For a better understanding of the technical solutions of the present application, reference is made below to the accompanying drawings, which form a part hereof.

It should be clear that the described embodiments are only some, but not all, of the embodiments of the present application. Based on the embodiments herein, one of ordinary skill in the art, having no creative effort, falls within the scope of the disclosure.

The terminology used in the embodiments of the present application is for the purpose of describing particular embodiments only and is not intended to be limiting of the disclosure. As used in this application and the appended claims, the singular forms "a," "an," and "the" are intended to include the plural forms as well, unless the context clearly indicates otherwise.

It will be understood that the term "and/or" as used herein is merely an associative relationship that describes associated objects, that there may be three relationships, e. g. , A and/or B, which may mean that A alone is present, while both A and B are present, B alone is present, three of which exist alone. Additionally, the character "/" herein generally means that the contextual object is a "or" relationship.

An anode material of an embodiment, including aggregates, the aggregates include an active material, a carbon material, and a dopant element, where the carbon material is shown in a Raman spectrum obtained by Raman spectroscopy using a measurement light source having a wavelength of 532 nm that G band is observed at 1530 cm⁻¹ to 1630 cm⁻¹, and a D band is observed at 1280 cm⁻¹ to 1380 cm⁻¹, and a ratio I_{D}/I_{G} of between peak intensity I_{D} of the D band and peak intensity I_{G} of the G band is 1 to 2.5.

The induction of the dopant element of the present embodiment in the carbon material generates an active site with high activity and selectivity. The active site in one aspect is more easily combined with surface of the active material to form more firm connection; on the other hand, as the activity increasing, the energy barrier decreases, the rearrangement resistance of the carbon atoms decreases, the ordered arrangement is more easily formed during the high temperature heat treatment, it appears that order in local short range increase, and the degree of graphitization is partly increased, thereby improving the conductivity of the carbon material.

Specifically, I_{D}/I_{G} is 1, 1.2, 1.5, 1.7, 1.8, 2, 2.1, 2.2, or 2.5, or other values within the above ranges, which are not limited herein. I_{D}/I_{G} is 1.7 to 2.3, the carbon material with graphitization degree within this range has good electronic conductivity.

An anode material of an embodiment, including an aggregate, the aggregate includes an active material, a carbon material, and a dopant element, where the dopant element is capable of inducing the carbon material to produce a Lewis acid site, and at least a portion of the active material is bound to the carbon material though the Lewis acid site.

The addition of the dopant element may promote bonding of the carbon material to the active material, and furthermore the degree of graphitization of the carbon material may be increased, thereby improving conductivity. The difference in electronegativity between the dopant element and the carbon atom is great. Thus the introduction of the dopant element causes the charge distribution of the carbon atom to be non-uniform, to generate a Lewis acid site. The induction of the dopant element in the carbon material generates an active site with high activity and selectivity. The active site on one hand is more easily combined with surface of the active material to form more firm connection. Based on this principle, the closer the dopant element is to the surface of the carbon material or active material, the easier it is to induce the carbon material to produce a Lewis acid site.

It is noted that the dopant element is present in the aggregate in an atomic form, and the dopant element in atomic form can be observed with a transmission electron microscope and a high angle annular dark-field scanning transmission electron microscope.

In some embodiments, the dopant element includes at least one of fluorine, nitrogen, and phosphorus; it is understood that the dopant element may be fluorine, nitrogen, or phosphorus; may also be a combination of fluorine and nitrogen, or a combination of fluorine and phosphorus, or a combination of nitrogen and phosphorus; and may also include fluorine, nitrogen, and phosphorus at the same time.

In some embodiments, a content of the dopant element in the aggregate is from 50 ppm to 20,000 ppm. The content of the dopant element may be specifically 50 ppm, 100 ppm, 500 ppm, 1000 ppm, 2000 ppm, 4000 ppm, 5000 ppm, 10000 ppm, 20000 ppm, etc.; or other values within the above ranges, which are not limited herein. Within this range, it can effectively improve the degree of graphitization of the carbon material, which facilitates to improving the stability of the interface of the active material, thereby increasing the cycling stability of the material; the initial efficiency, the expansion rate, and the cycle life of the anode material are improved. The content of the dopant element can be obtained by a test method such as ion chromatography, compositional analysis, or spectrum analysis (EDX analysis).

In some embodiments, at least one of the active material and the carbon material contains the dopant element.

In some embodiments, the dopant element is distributed on the surface and/or interior of the active material. When the dopant element is distributed inside the active material, a part of the dopant element replaces the atoms in crystal structure of the material and forms a valence bond with the adjacent atoms, and a part of the dopant element is distributed in lattice defect of the crystal structure. Such as the Si material, the fluorine element replaces the silicon atom in the silicon crystal structure and forms a fluoro-silicon bond with the adjacent silicon atoms, and it may also be distributed in the lattice defects of the crystal structure of the silicon based material.

In other embodiments, the dopant element is distributed on the surface and/or inside of the carbon material. When the dopant element is distributed inside the carbon material, a part of the dopant element replaces the atoms in crystal structure of the carbon material and forms a valence bond with the adjacent carbon atom, and a part of the dopant element is distributed in lattice defect of the carbon crystal structure.

Of course, in some embodiments, the dopant element is distributed on both of the surface and/or inside of the active material, and the surface and/or inside of the carbon material.

It is noted that since the dopant content of the dopant element is very low, which is not enough to form a long-range ordered structure, it does not cause a large change in the crystal structure of the material itself, thereby enabling better retention of the structural stability of the material.

In some embodiments, in the aggregate, the active material is distributed among the carbon materials or the surface of the carbon material, preferably, the active material is uniformly dispersed in the carbon material.

In some embodiments, pores are formed among the carbon materials, and at least a portion of the active material is filled in the pores. Such filling method is effective to utilize pores formed among the carbon materials, so that the active material dispersed in the pores has a certain deformation space when its volume changes during charging and discharging, reducing the disruption of stress due to volume changing.

In some embodiments, the carbon material has a pore volume of ≥ 0.35 cm³/g. Where the pore volume of the carbon material includes the pore volume of pores structure formed among the carbon materials and the pore volume of the porous carbon material (porous structure of the carbon material itself). With a pore volume of no less than 0.35 cm³/g, on the one hand, the internal pores can well contain the active material and reserve space for the expansion of the active material; on the other hand, a suitable pore volume can provide more channels for the penetrating of surface-coated carbon during subsequent carbon coating processes, facilitating the coating of carbon. The pore volume of the carbon material is tested by a gas adsorption BET method.

In some embodiments, the active material includes an active particle.

In some embodiments, the active material refers to a substance that can react with lithium to de-intercalate lithium. Specifically, the active material includes at least one of Li, Na, K, Sn, Ge, Si, Fe, SiOₓ (0<x≤2), Mg, Ti, Zn, Al, P, and Cu; the active material may be an elemental metal. In some embodiments, the active material may be specifically a Si particle, a Sn particle, a Ge particle, an Al particle. In other embodiments, the active material may also be a silicon lithium alloy, a silicon magnesium alloy, and so on. Of course, it is noted that in some cases, the active material includes an elemental particle and an alloy.

In some embodiments, the active material has a median particle diameter of 1 nm to 300 nm. Specifically, it may be 1 nm, 5 nm, 10 nm, 50 nm, 75 nm, 100 nm, 150 nm, 200 nm, 250 nm, 300 nm and so on, which are not limited herein.

In some embodiments, the carbon material includes at least one of crystalline carbon, noncrystalline carbon, artificial graphite, natural graphite, soft carbon, hard carbon, amorphous carbon, carbon nanotubes, carbon fiber, and graphene.

In some embodiments, a mass ratio of the active material to the carbon material is (90 to 10): (10 to 90). Specifically, it may be 90:10, 80:20, 70:30, 60:40, 50:50, 40:60, 30:70, 20:80, 10:90, and so on, which are not limited herein.

In some embodiments, the aggregate has a porosity of ≤10% and a pressure-resistant hardness of ≥100 MPa.

At this point, the aggregate has a low porosity, i.e., its solidity is high, on one hand, it facilitates to increase the energy density of the composite material, on the other hand, even if the surface of the material with high solidity is destroyed, the electrolyte does not readily penetrate into the interior of the aggregate, which facilitates protecting the active material particles inside, reducing the probability of contact of the electrolyte with the active material, thereby facilitating the formation of a stable solid electrolyte film. In addition, the high solidity aggregate has a higher pressure-resistant hardness, which is able to offset the stress effects bringing by expansion, improve the structural stability of the anode material, can effectively suppress volume expansion of the anode material, decrease the expansion rate, and improve cell cycle performance.

The porosity is tested by a mercury intrusion method using a mercury porosimeter. The porosity is tested at least three times, using an arithmetic average of the at least three times as a result of the assay.

The pressure-resistant hardness is tested by a nanoindentation, using a method with a load of 0.6 N, an indentation depth of 0.5 µm.

In some embodiments, the aggregate has a porosity of ≤10%, and the porosity of the aggregate may be specifically 10%, 9%, 9.5%, 8%, 8.5%, 7.5%, 7%, 6.5%, 6%, or 5%, and so on, or other values within the above ranges, which are not limited herein. It is understood that the aggregate has a low porosity, i.e, its solidity is high, facilitating the formation of a stable solid electrolyte film, reducing the contact of the electrolyte with the active material. Preferably, the aggregate has a porosity of ≤5%, more preferably, the aggregate has a porosity of ≤3%.

The aggregate has a pressure-resistant hardness of ≥100 MPa; and the pressure-resistant hardness of the aggregate may be specifically 100 MPa, 150 MPa, 250 MPa, 300 MPa, 450 MPa, 500 MPa, 750 MPa, 900 MPa, 1150 MPa, 1200 MPa, or 1250 MPa, and so on, or other values within the above ranges, which are not limited herein. Because it has strong rigidity, and the structural stability of the particles is strong, which offset a certain volume expansion stress, thereby reducing expansion, improving battery cycling stability. Preferably, the aggregate has a pressure-resistant hardness of ≥200 MPa, more preferably, the aggregate has a pressure-resistant hardness of ≥400 MPa.

In some embodiments, the density of the aggregate satisfies the following relationship: the difference between the test density and the theoretical density of the aggregate is ≤5%. The closer the density of the aggregate particle to the theoretical density, and the smaller the phase difference, the less the porosity inside the particles, and the more dense, which facilitate to form a stable solid electrolyte film, reducing the contact of the electrolyte with the active material.

Specifically, the density of the aggregate is calculated as follows: (ρ2-ρ1)/ρ2 ≤5%, where ρ1 is the test density of the aggregate, and ρ2 is the theoretical density of the aggregate;
where ρ2 is the sum of the values of the mass percentage content of each component in the aggregate * the theoretical density of each component.

In a specific example, when the aggregate includes an active material and a carbon material, ρ2 = the mass percentage content of the active material in the aggregate * the theoretical density of the active material + the mass percentage content of the carbon material in the aggregate * the theoretical density of the carbon material.

In some embodiments, the aggregate further includes a metal oxide. Compounding the metal oxide with the active material can reduce expansion of the active material, improve long cycle performance, and the aggregate has a higher pressure-resistant hardness. It is noted that, at this point, the theoretical density ρ2 of the aggregate = the mass percentage content of the active material in the aggregate * the theoretical density of the active material + the mass percentage content of the metal oxide in the aggregate * the theoretical density of the metal oxide + the mass percentage content of the carbon material in the aggregate * the theoretical density of the carbon material.

At this point, when the aggregate further includes a metal oxide, fluorine element is further distributed to the interior or surface of the metal oxide; when the F element is distributed inside the metal oxide, a part of the F element replaces the atoms in crystal structure of the metal oxide and forms a valence bond with the adjacent atom, and a part of the dopant element is distributed in lattice defect of crystal structure of the metal oxide. In particular, for example the metal oxide is SnO₂, the Sn atom in the crystal structure in SnO₂ is replaced, and forms a valence with the adjacent atoms or be distributed in the lattice defect of the crystal structure.

In some embodiments, at least a portion of the metal oxide is filled in the pores among the carbon materials.

In some embodiments, the metal oxide has a chemical formula of MₓO_{y}, 0.2≤y/x≤3, where M includes at least one of Sn, Ge, Si, Fe, Cu, Ti, Na, Mg, Al, Ca, and Zn; specifically, the metal oxide can be any one of GeO₂, SnO₂, ZnO, TiO₂, Fe₃O₄, MgO, SiO₂, and CuO.

In some embodiments, the mass ratio of the active material to the metal oxide is (30 to 100):(0.5 to 10). Specifically, it may be 30:0.5, 40:1, 50:2, 60:2, 70:3, 80:6, 90:7.5, 100:10, or 100:2, and so on, or other values within the above ranges, which are not limited herein.

In some embodiments, the metal oxide is in a form of sheet and/or strip shape.

In some embodiments, the metal oxide has an aspect ratio greater than 2. It is noted that when the metal oxide is in a form of strip shape, the aspect ratio specifically refers to the ratio of length to particle size of the particle, where the particle size refers to the maximum straight-line distance between two points on the periphery of the cross-section perpendicular to the length of the metal oxide in the form of strip shape; when the metal oxide is in a form of sheet, the aspect ratio specifically refers to the ratio of length to width of the sheet metal oxide. Specifically, the metal oxide may have an aspect ratio of 2, 2.5, 3, 3.5, 4, 4.5, 5, 6, 7, 8, 9, 12, 15, 17, 18, 22, and so on, or other values within the above ranges, which are not limited herein. According to a number of experiments, it is found that when the aspect ratio of the metal oxide is greater than 2, the physical bonding force of the metal oxide to the active material can be increased, thereby offsetting the volume expansion variation of the active material, improving cycle performance.

In some embodiments, a shortest distance among the metal oxides is ≥100 nm. Controlling the shortest distance may enable the active material to be filled among the metal oxides, and the metal oxide may serves as a support for the structure to enhance the stability of the material, thereby offsetting the volume expansion variation of the active material, improving cycle performance. Specifically, it may be 100 nm, 150 nm, 200 nm, 250 nm, 300 nm or 400 nm, and so on. A shortest distance among the metal oxides of the present embodiment refers to the shortest straight line distance of any two metal oxide particles. Preferably, the spacing of the metal oxides is ≥200 nm. The distance test method is as follows: sectioning with any of the metal oxide and preparing a sample, selecting optionally the particles therein, testing the shortest distance between any two metal oxides in the particle, where the test is performed not less than 50 times, and an average value is taken.

In some embodiments, the aggregate further includes a conductive enhancer. The conductive enhancer, in one aspect, can provide more carrier transport channels, thereby enhancing the transport of carriers inside the material; on the other hand, while also providing an excellent mechanical property, which may serves as a support for the structure to enhance the stability of the material.

At this point, when the aggregate further includes a conductive enhancer, fluorine element is further distributed to the interior or surface of the conductive enhancer material; when the F element is distributed inside the conductive enhancer material, a part of the F element replaces the atoms in crystal structure of the conductive enhancer material and forms a valence bond with the adjacent atom, and a part of the dopant element is distributed in lattice defect of crystal structure of the conductive enhancer material.

When the aggregate includes an active material, a conductive enhancer, and a carbon material, ρ2 = the mass percentage content of the active material in the aggregate * the theoretical density of the active material + the mass percentage content of the conductive enhancer in the aggregate * the theoretical density of the conductive enhancer + the mass percentage content of the carbon material in the aggregate * the theoretical density of the carbon material.

When the aggregate includes an active material, a metal oxide, a conductive enhancer, and a carbon material, ρ2 = the mass percentage content of the active material in the aggregate * the theoretical density of the active material + the mass percentage content of the metal oxide in the aggregate * the theoretical density of the metal oxide + the mass percentage content of the conductive enhancer in the aggregate * the theoretical density of the conductive enhancer + the mass percentage content of the carbon material in the aggregate * the theoretical density of the carbon material.

In some embodiments, at least a portion of the conductive enhancer is filled in the pores among the carbon materials.

In some embodiments, the conductive enhancer includes at least one of an alloy material and a conductive carbon; where the alloy material may include at least one of a zinc alloy, an aluminum alloy, a copper alloy, a silicon alloy, a nickel alloy, and a titanium alloy, and the conductive carbon may include at least one of carbon nanotube, carbon fiber, and graphite fiber.

In some embodiments, the conductive enhancer has a conductivity of 10⁰ S/m to 10⁸ S/m. Specifically, the conductivity of the conductive enhancer may be 1 S/m, 10 S/m, 100 S/m, 10³ S/m, 10⁴ S/m, 10⁵ S/m or 10⁸ S/m, and so on. The conductivity of the anode material is tested using a powder resistivity tester.

In some embodiments, the conductive enhancer is in a form of sheet and/or strip shape.

In some embodiments, a mass ratio of the conductive enhancer to the active material is (0.01 to 15):(50 to 100). Specifically, it may be 0.01:50, 15:50, 0.05:55, 0.1:60, 1:50, 5:60, 7.5:75, 10:80, or 15:100, and so on, or other values within the above ranges, which are not limited herein.

In some embodiments, the conductive enhancer has an aspect ratio of 2 to 5000. It is noted that when the conductive enhancer is in a form of strip shape, the aspect ratio specifically refers to the ratio of length to particle size of the particle, where the particle size refers to the maximum straight-line distance between two points on the periphery of the cross-section perpendicular to the length of the conductive enhancer in the form of strip shape; when the conductive enhancer is in a form of sheet, the aspect ratio specifically refers to the ratio of length to width of the sheet conductive enhancer. Specifically, the conductive enhancer may have an aspect ratio of 2, 30, 46, 150, 360, 670, 800, 900, 1500, 2000, 3000, 4000, 5000, and so on, or other values within the above ranges, which are not limited herein. According to a number of experiments, it has been found that the conductive enhancer with an aspect ratio in this range has a superior mechanical property, may serves as a support for the structure to enhance the stability of the material, thereby offsetting the volume expansion variation of the active material, improving cycling performance.

In some embodiments, the anode material further includes a carbon layer coated on at least a portion of the surface of the aggregate. Preferably, the carbon layer is distributed over the surface of the aggregate. The carbon layer is capable of reducing the contact of the active material with the electrolyte, reducing the generation of a passivation film, and increasing the reversible capacity of the battery.

In some embodiments, the material of the carbon layer includes amorphous carbon.

In some embodiments, the carbon layer has a thickness of 10 nm to 5000 nm. Specifically, the thickness of the carbon layer may be 10 nm, 50 nm, 100 nm, 400 nm, 500 nm, 750 nm, 1000 nm, 1500 nm, 2000 nm, 2500 nm, 3000 nm, 4000 nm, 5000 nm, and so on, or other values within the above ranges, which are not limited herein. When the carbon layer is too thick, it does not facilitate high rate charge and discharge of the material, reducing the comprehensive performance of the anode material; when the carbon layer is too thin, it does not facilitate to increase the conductivity of the anode material, and the volume expansion inhibition performance of the material is weak, resulting in a poor long cycle performance.

In some embodiments, the anode material has a median particle diameter of 0.5 µm to 30 µm. Specifically, it may be 0.5 µm, 1.5 µm, 3 µm, 10 µm, 16 µm, 26 µm, and so on, or other values within the above ranges, which are not limited herein. It is understood that when the median particle diameter of the anode material is controlled within the above ranges, it facilitates to improve cycling performance of the anode material. Preferably, the anode material has a median particle diameter of 1.5 µm to 15 µm.

In some embodiments, the anode material has a specific surface area of ≤10 m²/g. Specifically, it is 10 m²/g, 7 m²/g, 6 m²/g, 4 m²/g, 2 m²/g, 1 m²/g, and so on, or other values within the above ranges, which are not limited herein. It is understood that when the specific surface area of anode material is controlled within the above range, it facilitates to offset volume expansion, and to improve the cycling performance of the anode material. The anode material has a specific surface area of ≤5 m²/g. The specific surface area of the anode material is tested using a Micromeritics specific surface area analyzer.

In some embodiments, a mass ratio of the aggregate to the carbon layer is (90 to 10):(10 to 90). Specifically, it may be 90:10, 80:20, 70:30, 60:40, 50:50, 40:60, 30:70, 20:80, 10:90, and so on, which are not limited herein.

In some embodiments, the anode material further includes an oxide layer formed on at least a portion of the surface of the active material; when the active material is a silicon particle, the oxide layer is silicon oxide.

In some embodiments, the oxide layer has a thickness of 1 nm to 100 nm. The thickness of the oxide layer may be 1 nm, 10 nm, 20 nm, 30 nm, 40 nm, 50 nm, 60 nm, 70 nm, 80 nm, 90 nm, 100 nm, and so on, or other values within the above ranges, which are not limited herein.

In some embodiments, the oxide layer has pores, thereby providing space for the expansion of the active material, and reducing the volume expansion effect of the active material.

It is noted that the anode material of the various embodiments described above may be combined optionally without contradiction, such as a combined limitation of the pressure-resistant hardness, porosity and density of the aggregate.

As shown in FIG. 1, a preparation method of anode material according to another embodiment, includes the following:
Step S100: mixing an active material, a dopant, a first carbon source and a solvent to prepare a precursor;
Step S200, undergoing the precursor a primary heat treatment at 800°C to 980°C to obtain an aggregate; and
Step S300, undergoing the aggregate a carbon coating process to obtain the anode material.

The anode material prepared by the preparation method of this embodiment include an aggregate and a carbon layer coated on the surface of the aggregate, and the aggregate includes an active material, a carbon material, and a dopant element; where the carbon material is shown in a Raman spectrum obtained by Raman spectroscopy using a measurement light source having a wavelength of 532 nm that a G band is observed at 1530 cm⁻¹ to 1630 cm⁻¹, and a D band is observed at 1280 cm⁻¹ to 1380 cm⁻¹, and a ratio I_{D} /I_{G} of between peak intensity I_{D} of the D band and peak intensity I_{G} of the G band is 1 to 2.5.

By adding a dopant to the active material and the carbon source, the addition of the dopant may promote bonding of the carbon material to the active material, and furthermore the degree of graphitization of the carbon material may be increased, thereby improving conductivity. The induction of the dopant element in the carbon material generates an active site with high activity and selectivity. The active site in one aspect is more easily combined with surface of the active material to form more firm connection; on the other hand, as the activity increasing, the energy barrier decreases, the rearrangement resistance of the carbon atoms decreases, the ordered arrangement is more easily formed during the high temperature heat treatment, it appears that order in local short range increase, and the degree of graphitization is partly increased. Moreover, the addition of the dopant facilitates to improving the stability of the interface of the active material, thereby increasing the cycling stability of the material; the initial efficiency, the expansion rate, and the cycle life of the anode material are improved.

The preparation method of the present application are described in detail below in connection with the embodiments:
In step S100, mixing an active material, a dopant, a first carbon source, and a solvent to prepare a precursor.

In some embodiments, the active material has a median particle diameter of 1 nm to 300 nm. Specifically, it may be 1 nm, 20 nm, 30 nm, 40 nm, 50 nm, 60 nm, 70 nm, 80 nm, 90 nm, 100 nm, 120 nm, 150 nm, 200 nm, 250 nm, 300 nm, and so on, or other values within the above ranges, which are not limited herein. Controlling the median particle diameter of the active material to be within the ranges described above facilitates to improve cycling performance of the anode material.

In some embodiments, the active material includes at least one of Li, Na, K, Sn, Ge, Si, SiOₓ (0<x≤2), Fe, Mg, Ti, Zn, Al, P, or Cu; and the active material may be an elemental metal. In some embodiments, the active material may be specifically a Si particle, a Sn particle, a Ge particle, an Al particle. **In** other embodiments, the active material may also be a silicon lithium alloy, a silicon magnesium alloy, and so on. Of course, it is noted that in some cases, the active material includes an elemental particle and an alloy.

**In** some embodiments, when the active material is SiOₓ (0<x≤2), the dopant is fluoride, the addition of fluoride can be effective to promote the disproportionation of SiOₓ to form Si and SiO₂, thereby forming a more uniform SiO₂ coating layer, facilitating stabilization and improvement of the interface of silicon, and improving the cycling stability of the material. Moreover, the fluoride etches the oxide layer on the surface of the silicon to obtain pores, thereby providing space for silicon expansion, and reducing the volume expansion effect of silicon.

**In** some embodiments, the dopant includes at least one of a fluorine source, a phosphorus source, and a nitrogen source. With this type of dopant, the difference in electronegativity between the doped atom and the carbon atom is great. Thus the introduction of the dopant atom causes the charge distribution of the carbon atom to be non-uniform, to generate a Lewis acid site. The active site, on one hand, is more easily combined with surface of the active material to form more firm connection; on the other hand, as the activity increasing, the energy barrier decreases, the rearrangement resistance of the carbon atoms decreases, the ordered arrangement is more easily formed during the high temperature heat treatment, it appears that order in local short range increase, and the degree of graphitization is partly increased. Moreover, the addition of the dopant element facilitates to improving the stability of the interface of the active material, thereby increasing the cycling stability of the material; the initial efficiency, the expansion rate, and the cycle life of the anode material are improved.

In some embodiments, the fluorine source includes a fluoride, and the fluoride includes at least one of hydrogen fluoride, lithium fluoride, ammonium fluoride, potassium fluoride, aluminum fluoride, magnesium fluoride, sodium fluoride, calcium fluoride, tetrabutyl ammonium fluoride, triethyl methoxymethyl ammonium fluoride, ammonium fluoroborate, and tetrabutyl ammonium fluoroborate.

In some embodiments, the phosphorus source includes at least one of triphenyl phosphine, tetraphenyl phosphonium bromide, 1-butyl-3-methylimidazolium sodium hexafluorophosphate, phosphine, sodium phosphate, sodium phosphite, elemental phosphorus, sodium hydrogen phosphate, sodium dihydrogen phosphate, sodium hydrogen phosphite, and phosphoric acid.

In some embodiments, the nitrogen source includes at least one of ammonia, ammonium chloride, ammonium carbonate, ammonium bicarbonate, urea, thiourea, lithium nitride, melamine, and hydrazine hydrate.

In some embodiments, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, mass ratio of the active material, the dopant, and the first carbon source is (30 to 120):(0.9 to 20):(10 to 50). Specifically, the mass ratio of the active material, the dopant, and the first carbon source may be 30:0.9:10, 40:5:15, 70:10:20, 60:12:30, 80:20:50, 100:10:10, 110:5:20, 120:3:15, and so on, or other values within the above ranges, which are not limited herein.

In some embodiments, the solvent includes organic solvent. Specifically the organic solvent includes at least one of methanol, ethanol, ethylene glycol, propanol, isopropanol, glycerol, n-butanol, isobutanol, and pentanol. Adding the various components into organic solvent and performing wet ball milling can improve mixing uniformity of the components, and facilitate rapid drying.

In some embodiments, the process of mixing an active material, a dopant, a first carbon source, and a solvent is specifically: dispersing the active material in the organic solvent and adding the dopant and the first carbon source.

In some embodiments, the process of preparing the precursor further includes performing at least one of dispersion treatment and drying treatment after mixing the active material, the dopant, the first carbon source, and the solvent.

Preferably, performing dispersion treatment and drying treatment in sequence after mixing the active material, the dopant, the first carbon source, and the solvent.

In some embodiments, the dispersion treatment includes at least one mechanical stirring, ultrasonic dispersion, and grinding dispersion; which can avoid agglomeration of particles and allow the active material to disperse into smaller nanoparticles.

In some embodiments, a temperature of the drying treatment is 30°C to 400°C. Specifically, it may be 30°C, 40°C, 50°C, 80°C, 100°C, 120°C, 150°C, 180°C, 200°C, 250°C, 280°C, 300°C, or 400°C, and so on. A time of the drying treatment is 1 h to 15 h. Specifically, it may be 1 h, 3 h, 5 h, 7 h, 9 h, 10 h, 12 h, or 15 h, and so on. The manner of the drying treatment may be, for example, oven drying, freeze drying, blending steaming, and spray drying, and so on. The drying treatment in the present embodiment may remove the solvent in precursor solution as much as possible.

In some embodiments, an additive is also added in the process of mixing an active material, a dopant, a first carbon source, and a solvent. The additives in this embodiment may be effective to improve the stability of the connection of the active material to the carbon material, thereby forming a strong system.

In some embodiments, the additive includes at least one of a surfactant and a coupling agent. It has been found through experiments that employing this kind of additive is effective to improve the stability of the connection of the active material to the carbon material to form a strong system, reducing porosity; thereby reducing the expansion rate of the anode material, and increasing cycling stability.

Specifically, the surfactant includes, but is not limited to, at least one of n-octadecanoic acid, lauric acid, polyacrylic acid (PAA), sodium dodecyl benzene sulfonate (SDBS), n-eicosanoic acid, palmitic acid, tetradecanoic acid, undecanoic acid, cetyl trimethyl ammonium bromide, and polyvinyl pyrrolidone (PVP).

The coupling agent includes silane coupling agent. Specifically, the silane coupling agent includes, but not limited to, at least one of γ-aminopropyl triethoxy silane, γ-glycidoxypropyl trimethoxy silane, and γ-methacryloxypropyl trimethoxy silane.

In some embodiments, a mass ratio of the active material to the additive is (50 to 100):(0.01 to 5).

In some embodiments, at least one of a metal oxide and a conductive enhancer is also added in the process of mixing an active material, a dopant, a first carbon source, and a solvent.

In some embodiments, the metal oxide has a chemical formula of MₓO_{y}, 0.2≤y/x≤3, where M includes at least one of Sn, Ge, Si, Fe, Cu, Ti, Na, Mg, Al, Ca, and Zn.

In some embodiments, the metal oxide is in a form of sheet and/or strip shape.

In some embodiments, the metal oxide has an aspect ratio greater than 2.

In some embodiments, a mass ratio of the conductive enhancer to the active material is (0.01 to 15):(50 to 100).

In some embodiments, the conductive enhancer has a conductivity of 10⁰ S/m to 10⁸ S/m.

In some embodiments, the conductive enhancer is in a form of sheet and/or strip shape.

In some embodiments, the conductive enhancer has an aspect ratio of 2 to 5000.

In some embodiments, the conductive enhancer includes at least one of an alloy material and a conductive carbon.

In some embodiments, before undergoing the precursor a primary heat treatment, the preparation method further includes undergoing the precursor a densification treatment, such that the aggregate has a porosity of ≤10% and a pressure-resistant hardness of ≥100 MPa.

In some embodiments, the densification treatment includes at least one of a fusion process, a blending process, a moulding process, an isostatic pressing process, and an impregnation process.

In some embodiments, the fusion process is mechanical fusion. Undergoing the precursor a fusion process increases the pressure-resistant hardness of the anode material, and further undergoing the precursor a primary heat treatment improves the stability of the particle structure as well as improves the stability of the connection between the active material and the first carbon source and reduces porosity. Of course, in other embodiments, other processes may also be employed for the densification treatment, such as moulding, isostatic pressing, impregnation, and so on, providing the aggregate has a porosity of ≤10% and a pressure-resistant hardness of ≥100 MPa.

In some embodiments, a rotating speed of fusion machine used for the mechanical fusion is 500 r/min to 3000 r/min;

In some embodiments, a blade gap width of the fusion machine used for mechanical fusion is 0.01 cm to 0.5 cm;

In some embodiments, a time of the mechanical fusion is at least 0.5 h.

In step S200, undergoing the precursor a primary heat treatment at 800°C to 980°C to obtain an aggregate.

In some embodiments, the primary heat treatment may be, for example, vacuum sintering, hot-pressed sintering, or atmospheric sintering. A temperature of the primary heat treatment is 800°C to 980°C. Specifically, it may be 800°C, 810°C, 820°C, 830°C, 840°C, 850°C, 860°C, 870°C, 880°C, 890°C, 900°C, 910°C, 920°C, 930°C, 940°C, 950°C, 960°C, 970°C, 980°C, and so on, or other values within the above ranges, which are not limited herein.

In some embodiments, a time of the primary treatment is 1 h to 5 h. Specifically, it may be 1 h, 2 h, 3 h, 4 h, 5 h, and so on, or other values within the above ranges, which are not limited herein.

In some embodiments, the primary heat treatment is performed in a first protective atmosphere. Specifically, the gas of the first protective atmosphere includes at least one of nitrogen, helium, neon, argon, and krypton.

In some embodiments, a crushing process is performed after the primary heat treatment, where the manner of the crushing is by means of any one of a mechanical shredder, a gas flow shredder, and a low temperature shredder.

Step S300, undergoing the aggregate a carbon coating process to obtain the anode material.

It is noted that the anode material of the present embodiment may not be carbon coated, in this case the step S300 may be omitted.

In some embodiments, the carbon coating process may be specifically: mixing the aggregate with a second carbon source for secondary heat treatment.

In some embodiments, the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, a mass ratio of the aggregate to the second carbon source is (20 to 100):(10 to 80). The mass ratio of the aggregate to the second carbon source may be 20:10, 30:15, 50:60, 80:30, 90:20, 100:10, and so on, or other values within the above ranges, which are not limited herein.

In some embodiments, the secondary heat treatment may be, for example, vacuum sintering, hot-pressed sintering, or atmospheric sintering. A temperature of the secondary heat treatment is 800°C to 900°C. Specifically, it may be 800°C, 810°C, 820°C, 830°C, 840°C, 850°C, 860°C, 870°C, 880°C, 890°C, 900°C, and so on, or other values within the above ranges, which are not limited herein.

In some embodiments, a time of the secondary heat treatment is 1 h to 5 h. Specifically, it may be 1 h, 2 h, 3 h, 4 h, 5 h, and so on, or other values within the above ranges, which are not limited herein.

In some embodiments, the secondary heat treatment is performed in a second protective atmosphere; where the gas of the second protective atmosphere includes at least one of nitrogen, helium, neon, argon, and krypton.

In some embodiments, after the secondary heat treatment, at least one of crushing, sieving and demagnetizing is further performed. Preferably, after the secondary heat treatment, crushing, sieving and demagnetizing are performed in sequence.

In some embodiments, the manner of the crushing is by means of any one of a mechanical shredder, a gas flow shredder, and a low temperature shredder.

In some embodiments, the manner of the sieving is by means of any one of a fixed sieve, a drum screen, a resonance screen, a roller screen, a vibratory screen, and a chain sieve, where a number of the sieving is ≥500 mesh. Specifically, a mesh number of the sieving may be 500 mesh, 600 mesh, 700 mesh, 800 mesh, and so on. Controlling the particle size of the anode material within the above ranges facilitates increasing cycling performance of the anode material.

In some embodiments, a device for the demagnetizing is any one of a permanent magnet drum separator, an electromagnetic deferromagnetic machine, and a pulsating high gradient magnetic separator. The demagnetizing is to control the magnetic material content of resulting anode material, to avoid affecting of the magnetic material on the discharging effect of the lithium ion and the safety of the battery in using.

The present application also provides a lithium ion battery including an anode material as described above, or an anode material prepared by the preparation method described above.

The median particle diameter in the present disclosure refers to the average particle size, the physical meaning of which is the particle size when the cumulative particle size distribution percentage of the particles reaches 50%, which is tested by a Malvern particle size meter. The Malvern particle size meter uses the scattering phenomenon of the particles to light, to comprehensively calculate the particle size distribution of the particles under test according to the distribution of the scattered light energy.

The embodiments of the present application are further illustrated by the following several examples. The embodiments herein are not limited to the specific examples described below. Variations may be made as appropriate within the scope of the independent claims.

### Example 1

The preparation method of anode material of the present example including the following:
1) The silicon particles having a median particle diameter of 50 nm were dispersed in an ethanol solution (40% of volume percentage concentration), and then triethyl methoxymethyl ammonium fluoride and phenolic resin were added and mixed uniformly, where the mass ratio of silicon particles, triethyl methoxymethyl ammonium fluoride and phenolic resin was 50:4.3:24.5. Then a drying process was performed in a drying temperature of 150°Cand a drying time of 5 h, to obtain a precursor;
2) The precursor was placed in a heat treatment furnace, an argon was introduced, and the temperature was heat up to 900°C, for reacting for 3 h to obtain an aggregate;
3) The aggregates and an asphalt were mixed in a mass ratio of 40:30, stirred, dispersed uniformly, then performed a drying process in a drying temperature of 150°C and a drying time of 5 h. The dried material was added into a high temperature box furnace, a nitrogen gas was introduced, a heat treatment was performed at 890°C for 3 h, followed by crushing, and sieving through a 500 mesh screen, and an anode material was obtained.

The anode material prepared by this example includes an aggregate, and a carbon layer coated on the surface of the aggregate, where the aggregate includes silicon powder, a carbon material, and fluorine element doped in the carbon material and the silicon powder. The anode material has a median particle diameter of 13 µm and a specific surface area of 6.2 m²/g. The carbon layer has an average thickness of 559 nm. The aggregate has a fluorine element content of 600 ppm. The carbon material was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 2.01.

The aggregate particles were tested by a mercury intrusion method, resulting in a porosity of the aggregate of 10.6%. The aggregate particles were tested by a nanoindentation, resulting in a pressure-resistant hardness of the aggregate of 45 MPa in average. The difference between the theoretical density and the test density of the aggregate is 2.1%.

### Example 2

The preparation method of anode material of the present example including the following:
1) The silicon particles having a median particle diameter of 70 nm were dispersed in an ethanol solution (40% of volume percentage concentration), and then triethyl methoxymethyl ammonium fluoride and sucrose were added and mixed uniformly, where the mass ratio of silicon particles, triethyl methoxymethyl ammonium fluoride, and sucrose was 39:1.3:38.4. Then a drying process was performed in a drying temperature of 200°C and a drying time of 3.5 h, to obtain a precursor;
2) The precursor was placed in a heat treatment furnace, an argon was introduced, and the temperature was heat up to 920°C, for reacting for 4 h to obtain an aggregate;
3) After crushing the aggregate, the aggregate and a phenolic resin were mixed in a mass ratio of 30:40, stirred, dispersed uniformly, then performed a drying process. Then the dried material was added into a high temperature box furnace, a nitrogen gas was introduced, a heat treatment was performed at 890°C for 3 h, followed by crushing, and sieving through a 500 mesh screen, and an anode material was obtained.

The anode material prepared by this example includes an aggregate, and a carbon layer coated on the surface of the aggregate, where the aggregate includes silicon powder, a carbon material, and fluorine element doped in the carbon material and the silicon powder. The anode material has a median particle diameter of 12.1 µm and a specific surface area of 3.2 m²/g. The carbon layer has an average thickness of 739 nm. The aggregate has a fluorine element content of 920 ppm. The aggregate has a fluorine element content of 600 ppm. The carbon material was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 1.99.

### Example 3

The preparation method of anode material of the present example including the following:
1) The silicon particles having a median particle diameter of 30 nm were dispersed in ethylene glycol and ultrasonicated for 10 min. Then 1.5 wt% of H₂O₂ additive was added and ultrasonicated for 20 min, dried, and mixed with LiF and fructose to obtain a precursor; where the mass ratio of silicon particles, LiF, and fructose was 30:3:35;
2) The precursor was placed in a heat treatment furnace, an argon was introduced, and the temperature was heat up to 800°C, for reacting for 5 h to obtain an aggregate;
3) The aggregate and an asphalt were mixed in a mass ratio of 40:35, stirred, dispersed uniformly, then performed a drying process at 100°C for 5 h. Then the dried material was added to a high temperature box furnace, a nitrogen gas was introduced, a heat treatment was performed at 900°C for 2 h, followed by crushing, and sieving through a 500 mesh screen, and an anode material was obtained.

The anode material prepared by this example includes an aggregate and a carbon layer coated on the surface of the aggregate, where the aggregate includes silicon powder, a carbon material, and fluorine element doped in the carbon material and the silicon powder. The anode material has a median particle diameter of 12.1 µm and a specific surface area of 5.2 m²/g. The carbon layer has an average thickness of 5.7 nm. The aggregate has a fluorine element content of 1030 ppm. The carbon material was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 1.94.

### Example 4

The preparation method of anode material of the present example including the following:
1) The silicon particles having a median particle diameter of 80 nm were dispersed in propanol and ultrasonicated for 10 min. Then MgF₂ and glucose were added and mixed uniformly, where the mass ratio of silicon particles, MgF₂ and glucose was 45:1.3:33.5, to obtain a precursor after drying at 250°C for 2 h;
2) The precursor was placed in a heat treatment furnace, an argon was introduced, and the temperature was heat up to 900°C, for reacting for 3 h to obtain an aggregate;
3) The aggregate and an asphalt were mixed in a mass ratio of 40:37, stirred, dispersed uniformly, then dried at 250°C for 2 h. Then the dried material was added to a high temperature box furnace, a nitrogen gas was introduced, a heat treatment was performed at 800°C for 3 h, followed by crushing, and sieving through a 500 mesh screen, and an anode material was obtained.

The anode material prepared by this example includes an aggregate and a carbon layer coated on the surface of the aggregate, where the aggregate includes silicon powder, a carbon material, and fluorine element doped in the carbon material and the silicon powder. The anode material has a median particle diameter of 9.1 µm and a specific surface area of 4.2 m²/g. The carbon layer has an average thickness of 5.7 nm. The aggregate has a fluorine element content of 590 ppm. The carbon material was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 2.05.

### Example 5

The preparation method of anode material of the present example including the following:
1) The silicon particles having a median particle diameter of 20 nm were dispersed in butanol. Then tetrabutyl ammonium fluoride, polyvinyl chloride were added and mixed uniformly, where the mass ratio of silicon particles, tetrabutyl ammonium fluoride and polyvinyl chloride was 30:0.9:33.5, to obtain a precursor after drying at 300°C for 1 h;
2) The precursor was placed in a heat treatment furnace, an argon was introduced, and the temperature was heat up to 880°C, for reacting for 3 h to obtain an aggregate;
3) The aggregate and a phenolic resin were mixed in a mass ratio of 55:65, stirred, dispersed uniformly, then performed a drying process. Then the dried material was added to a high temperature box furnace, a nitrogen gas was introduced, a heat treatment was performed at 800°C for 3 h, followed by crushing, and sieving through a 500 mesh screen, and an anode material was obtained.

The anode material prepared by this example includes an aggregate and a carbon layer coated on the surface of the aggregate, where the aggregate includes silicon powder, a carbon material, and fluorine element doped in the carbon material and the silicon powder. The anode material has a median particle diameter of 15.1 µm and a specific surface area of 2.2 m²/g. The carbon layer has an average thickness of 667 nm. The aggregate has a fluorine element content of 15060 ppm. The carbon material was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 1.85.

### Example 6

The preparation method of anode material of the present example including the following:
1) The silicon particles having a median particle diameter of 120 nm were dispersed in n-pentanol. Then ammonium borofluoride and glucose were added and mixed uniformly, where the mass ratio of silicon particles, ammonium borofluoride and glucose was 30:2.0:48.5, to obtain a precursor after drying at 300°Cfor 1 h;
2) The precursor was placed in a heat treatment furnace, an argon was introduced, and the temperature was heat up to 980°C, for reacting for 3 h to obtain an aggregate;
3) The aggregate and a phenolic resin were mixed in a mass ratio of 44:50, stirred, dispersed uniformly, then performed a drying process. Then the dried material was added to a high temperature box furnace, a nitrogen gas was introduced, a heat treatment was performed at 900°C for 3 h, followed by crushing, and sieving through a 500 mesh screen, and an anode material was obtained.

The anode material prepared by this example includes an aggregate and a carbon layer coated on the surface of the aggregate, where the aggregate includes silicon powder, a carbon material, and fluorine element doped in the carbon material and the silicon powder. The anode material has a median particle diameter of 10.1 µm and a specific surface area of 2.0 m²/g. The carbon layer has an average thickness of 967 nm. The aggregate had a fluorine element content of 9620 ppm. The carbon material was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 1.9.

### Example 7

The preparation method of anode material of the present example including the following:
1) The silicon particles having a median particle diameter of 50 nm were dispersed in an ethanol solution (40% of volume percentage concentration) and then triethyl methoxymethyl ammonium fluoride and phenolic resin were added and mixed uniformly, where the mass ratio of silica particles, triethyl methoxymethyl ammonium fluoride and phenolic resin was 50:4.3:24.5. Then a drying process was performed in a drying temperature of 150°C and a drying time of 5 h, to obtain a precursor;
2) The precursor was placed in a fusion machine with a rotating speed of 500 r/min and a blade gap width of the fusion machine used for the mechanical fusion of 0.05 cm for a time of mechanical fusion of 0.5 h. The fused material was placed in a heat treatment furnace, an argon was introduced, and a primary heat treatment was performed at 900°C for 3 h, to obtain an aggregate;
3) The aggregate and an asphalt were mixed in a mass ratio of 40:30, stirred, dispersed uniformly, then performed a drying process in a drying temperature of 150°C and a drying time of 5 h. The dried material was added into a high temperature box furnace, a nitrogen gas was introduced, a heat treatment was performed at 890°C for 3 h, followed by crushing, and sieving through a 500 mesh screen, and an anode material was obtained.

The anode material prepared by this example includes an aggregate, and a carbon layer coated on the surface of the aggregate, where the aggregate includes silicon powder, a carbon material, and fluorine element doped in the carbon material and the silicon powder. The anode material has a median particle diameter of 13 µm and a specific surface area of 6.2 m²/g. The carbon layer has an average thickness of 559 nm. The aggregate has a fluorine element content of 600 ppm. The carbon material was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 2.49. The aggregate particles were tested by a mercury intrusion method, resulting in a porosity of the aggregate of 4.4%. The aggregate particles were tested by a nanoindentation, resulting in a pressure-resistant hardness of the aggregate of 223 MPa in average. The difference between the theoretical density and the test density of the aggregate is 2.1%.

### Example 8

The preparation method of anode material of the present example including the following:
1) The Ge particles having a median particle diameter of 20 nm were dispersed in butanol. Then tetrabutyl ammonium fluoride and polyvinyl chloride were added and mixed uniformly, where the mass ratio of Ge particles, tetrabutyl ammonium fluoride and polyvinyl chloride was 100:20:50, to obtain a precursor after drying at 300°Cfor 1 h;
2) The precursor was placed in a fusion machine with a rotating speed of 1500 r/min and a blade gap width of the fusion machine used for the mechanical fusion of 0.3 cm for a time of mechanical fusion of 1 h. The fused material was placed in a heat treatment furnace, an argon was introduced, and a primary heat treatment was performed at 900°C for 3 h, to obtain an aggregate;
3) The aggregate and an asphalt were mixed in a mass ratio of 50:10, stirred, dispersed uniformly, then performed a drying process in a drying temperature of 150°C and a drying time of 5 h. The dried material was added into a high temperature box furnace, a nitrogen gas was introduced, a heat treatment was performed at 890°C for 3 h, followed by crushing, and sieving through a 500 mesh screen, and an anode material was obtained.

The anode material prepared by this example includes an aggregate, and a carbon layer coated on the surface of the aggregate, where the aggregate includes silicon powder, a carbon material, and fluorine element doped in the carbon material and the silicon powder. The anode material had a median particle diameter of 12 µm and a specific surface area of 5.9 m²/g. The carbon layer had an average thickness of 102 nm. The aggregate had a fluorine element content of 8040 ppm. The aggregate particles were tested by a mercury intrusion method, resulting in a porosity of the aggregate of 4.3%. The aggregate particles were tested by a nanoindentation, resulting in a pressure-resistant hardness of the aggregate of 198 MPa in average. The difference between the theoretical density and the test density of the aggregate is 1.8%.

### Example 9

The difference between this example and Example 1 was that step 1) was different, where in step 1), an additive was further added.

Specifically, step 1) was that the silicon particles having a median particle diameter of 50 nm were dispersed in an ethanol solution (40% of volume percentage concentration), and then triethyl methoxymethyl ammonium fluoride, phenolic resin and lauric acid were added and mixed uniformly, where the mass ratio of silicon particles, triethyl methoxymethyl ammonium fluoride, phenolic resin and lauric acid was 50:4.3:24.5:3.3. Then a drying process was performed in a drying temperature of 150°Cand a drying time of 5 h, to obtain a precursor.

The anode material prepared by this example includes an aggregate, and a carbon layer coated on the surface of the aggregate, where the aggregate includes silicon powder, a carbon material, and fluorine element doped in the carbon material and the silicon powder. The anode material has a median particle diameter of 13 µm and a specific surface area of 6.2 m²/g. The carbon layer has an average thickness of 559 nm. The aggregate has a fluorine element content of 602 ppm. The aggregate particles were tested by a mercury intrusion method, resulting in a porosity of the aggregate of 11.5%. The aggregate particles were tested by a nanoindentation, resulting in a pressure-resistant hardness of the aggregate of 69 MPa in average. The difference between the theoretical density and the test density of the aggregate is 2.6%.

### Example 10

The difference between this example and Example 7 was that step 1) was different, where in step 1), an additive was further added.

Specifically, step 1) was that The silicon particles having a median particle diameter of 50 nm were dispersed in an ethanol solution (40% of volume percentage concentration) and then triethyl methoxymethyl ammonium fluoride, phenolic resin and γ-aminopropyl triethoxy silane were added and mixed uniformly, where the mass ratio of silica particles, triethyl methoxymethyl ammonium fluoride, phenolic resin and γ-aminopropyl triethoxy silane was 50:4.3:24.5:3.3. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a carbon material, and fluorine element doped in the carbon material and the silicon powder. The anode material has a median particle diameter of 13 µm and a specific surface area of 6.2 m²/g. The carbon layer has an average thickness of 559 nm. The aggregate has a fluorine element content of 605 ppm. The aggregate particles were tested by a mercury intrusion method, resulting in a porosity of the aggregate of 3.6%. The aggregate particles were tested by a nanoindentation, resulting in a pressure-resistant hardness of the aggregate of 365 MPa in average. The difference between the theoretical density and the test density of the aggregate is 2.2%.

### Example 11

The difference between this example and Example 1 was that step 1) was different, where in step 1), a metal oxide was further added.

Specifically, step 1) was that the silicon particles having a median particle diameter of 50 nm were dispersed in an ethanol solution (40% of volume percentage concentration), and then triethyl methoxymethyl ammonium fluoride, phenolic resin and GeO₂ particles having an aspect ratio of 12 were added and mixed uniformly, where the mass ratio of silicon particles, triethyl methoxymethyl ammonium fluoride, phenolic resin and GeO₂ particles was 50:4.3:24.5:1.9. Then a drying process was performed in a drying temperature of 150°Cand a drying time of 5 h, to obtain a precursor.

The anode material prepared by this example includes an aggregate, and a carbon layer coated on the surface of the aggregate, where the aggregate includes silicon powder, a GeO₂ particle, a carbon material, and fluorine element doped in the carbon material, the GeO₂ particle and the silicon powder. The anode material has a median particle diameter of 13 µm and a specific surface area of 6.2 m²/g. The carbon layer has an average thickness of 559 nm. The aggregate has a fluorine element content of 601 ppm. The aggregate particles were tested by a mercury intrusion method, resulting in a porosity of the aggregate of 10.2%. The aggregate particles were tested by a nanoindentation, resulting in a pressure-resistant hardness of the aggregate of 78 MPa in average. The difference between the theoretical density and the test density of the aggregate is 2.3%. The minimum value of the spacing among the metal oxides is 26 nm.

### Example 12

The difference between this example and Example 7 was that step 1) was different, where in step 1), a metal oxide was further added.

Specifically, step 1) was that The silicon particles having a median particle diameter of 50 nm were dispersed in an ethanol solution (40% of volume percentage concentration) and then triethyl methoxymethyl ammonium fluoride, phenolic resin and ZnO particles having an aspect ratio of 8 were added and mixed uniformly, where the mass ratio of silica particles, triethyl methoxymethyl ammonium fluoride, phenolic resin and ZnO particles was 50:4.3:24.5:3.6. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a ZnO particle, a carbon material, and fluorine element doped in the carbon material, the ZnO particle and the silicon powder. The anode material has a median particle diameter of 13 µm and a specific surface area of 6.2 m²/g. The carbon layer has an average thickness of 559 nm. The aggregate has a fluorine element content of 608 ppm. The aggregate particles were tested by a mercury intrusion method, resulting in a porosity of the aggregate of 5.0%. The aggregate particles were tested by a nanoindentation, resulting in a pressure-resistant hardness of the aggregate of 284 MPa in average. The difference between the theoretical density and the test density of the aggregate is 1.9%. The minimum value of the spacing among the metal oxides is 106 nm.

### Example 13

The difference between this example and Example 1 was that step 1) was different, where in step 1), a conductive enhancer was further added.

Specifically, step 1) was that The silicon particles having a median particle diameter of 50 nm were dispersed in an ethanol solution (40% of volume percentage concentration) and then triethyl methoxymethyl ammonium fluoride, phenolic resin and carbon nanotubes (CNT) having a diameter of 20 nm and an aspect ratio of 500 were added and mixed uniformly, where the mass ratio of silica particles, triethyl methoxymethyl ammonium fluoride, phenolic resin and CNT was 50:4.3:24.5:0.5. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a CNT, a carbon material, and fluorine element doped in the carbon material, the CNT and the silicon powder. The anode material has a median particle diameter of 13 µm and a specific surface area of 6.2 m²/g. The carbon layer has an average thickness of 559 nm. The aggregate has a fluorine element content of 600 ppm. The aggregate particles were tested by a mercury intrusion method, resulting in a porosity of the aggregate of 10.7%. The aggregate particles were tested by a nanoindentation, resulting in a pressure-resistant hardness of the aggregate of 62 MPa in average. The difference between the theoretical density and the test density of the aggregate is 3.6%.

### Example 14

The difference between this example and Example 7 was that step 1) was different, where in step 1), a conductive enhancer was further added.

Specifically, step 1) was that The silicon particles having a median particle diameter of 50 nm were dispersed in an ethanol solution (40% of volume percentage concentration) and then triethyl methoxymethyl ammonium fluoride, phenolic resin and FeSi₂ having an aspect ratio of 18 were added and mixed uniformly, where the mass ratio of silica particles, triethyl methoxymethyl ammonium fluoride, phenolic resin and CNT was 50:4.3:24.5:2.1. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a FeSi₂, a carbon material, and fluorine element doped in the carbon material, the FeSi₂ and the silicon powder. The anode material has a median particle diameter of 13 µm and a specific surface area of 6.2 m²/g. The carbon layer has an average thickness of 559 nm. The aggregate has a fluorine element content of 610 ppm. The aggregate particles were tested by a mercury intrusion method, resulting in a porosity of the aggregate of 4.5%. The aggregate particles were tested by a nanoindentation, resulting in a pressure-resistant hardness of the aggregate of 205 MPa in average. The difference between the theoretical density and the test density of the aggregate is 1.2%.

### Example 15

The difference between this example and Example 1 was that step 1) was different, where in step 1), a conductive enhancer and a metal oxide were further added.

Specifically, step 1) was that The silicon particles having a median particle diameter of 50 nm were dispersed in an ethanol solution (40% of volume percentage concentration) and then triethyl methoxymethyl ammonium fluoride, phenolic resin, SiO particles having an aspect ratio of 22 and carbon nanotubes (CNT) having a diameter of 20 nm were added and mixed uniformly, where the mass ratio of silica particles, triethyl methoxymethyl ammonium fluoride, phenolic resin, SiO particles and CNT was 50:4.3:24.5:2.9:0.3. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a SiO particle, a CNT, a carbon material, and fluorine element doped in the carbon material, the SiO particle, the CNT and the silicon powder. The anode material has a median particle diameter of 13 µm and a specific surface area of 6.2 m²/g. The carbon layer has an average thickness of 559 nm. The aggregate has a fluorine element content of 590 ppm. The aggregate particles were tested by a mercury intrusion method, resulting in a porosity of the aggregate of 12.9%. The aggregate particles were tested by a nanoindentation, resulting in a pressure-resistant hardness of the aggregate of 99 MPa in average. The difference between the theoretical density and the test density of the aggregate is 2.1%.

### Example 16

The difference between this example and Example 7 was that step 1) was different, where in step 1), a metal oxide and a conductive enhancer were further added.

Specifically, step 1) was that The silicon particles having a median particle diameter of 50 nm were dispersed in an ethanol solution (40% of volume percentage concentration) and then triethyl methoxymethyl ammonium fluoride, phenolic resin, TiO₂ particles having an aspect ratio of 17 and a nickel silicon alloy having an aspect ratio of 50 were added and mixed uniformly, where the mass ratio of silica particles, triethyl methoxymethyl ammonium fluoride, phenolic resin, TiO₂ particles and nickel silicon alloy was 50:4.3:24.5:3.9:1.1. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a TiO₂ particle, a nickel silicon alloy, a carbon material, and fluorine element doped in the carbon material, the TiO₂ particle, the nickel silicon alloy and the silicon powder. The anode material has a median particle diameter of 13 µm and a specific surface area of 6.2 m²/g. The carbon layer has an average thickness of 559 nm. The aggregate has a fluorine element content of 598 ppm. The aggregate particles were tested by a mercury intrusion method, resulting in a porosity of the aggregate of 10.9%. The aggregate particles were tested by a nanoindentation, resulting in a pressure-resistant hardness of the aggregate of 229 MPa in average. The difference between the theoretical density and the test density of the aggregate is 1.9%.

### Example 17

The preparation method of anode material of the present example including the following:
1) The Al particles having a median particle diameter of 50 nm were dispersed in ethylene glycol and ultrasonicated for 10 min. Then 1.5 wt% of H₂O₂ additive was added and ultrasonicated for 20 min, dried, and mixed with aluminum fluoride and fructose to obtain a precursor; where the mass ratio of Al particles, aluminum fluoride, and fructose was 120:10:50;
2) The precursor was placed in a heat treatment furnace, an argon was introduced, and the temperature was heat up to 950°C, for reacting for 1.5 h to obtain an aggregate;
3) The aggregate and an asphalt were mixed in a mass ratio of 100:15, stirred, dispersed uniformly, then performed a drying process at 100°C for 5 h. Then the dried material was added to a high temperature box furnace, a nitrogen gas was introduced, a heat treatment was performed at 900°C for 2 h, followed by crushing, and sieving through a 500 mesh screen, and an anode material was obtained.

The anode material prepared by this example includes an aggregate and a carbon layer coated on the surface of the aggregate, where the aggregate includes Al powder, a carbon material, and fluorine element doped in the carbon material and the Al powder. The anode material has a median particle diameter of 11 µm and a specific surface area of 3.9 m²/g. The carbon layer has an average thickness of 98 nm. The aggregate has a fluorine element content of 2190 ppm.

### Example 18

The difference between this example and Example 1 was that no carbon coating is performed, i.e., step 3) was not included.

The anode material prepared by this example includes an aggregate, where the aggregate includes silicon powder, a carbon material, and fluorine element doped in the carbon material and the silicon powder. The anode material has a median particle diameter of 13 µm and a specific surface area of 26.2 m²/g. The aggregate has a fluorine element content of 890 ppm.

### Example 19

The nano-silicon-based composite anode material was prepared in substantially the same manner as in Example 5, except that the fluorine content in the aggregate is 20000 ppm, and the temperature of the heat treatment in step 2) was 980°C. The carbon material in this example was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 1.5.

### Example 20

The nano-silicon-based composite anode material was prepared in substantially the same manner as in Example 5, except that the fluorine content in the aggregate is 21890 ppm, and then a heat treatment was performed.

The anode material prepared by this example includes an aggregate, and a carbon layer coated on the surface of the aggregate, where the aggregate includes silicon powder, a carbon material, and fluorine element, and a mass ratio of the silicon powder and the carbon material is 63.0:37.0. The anode material has a median particle diameter of 13.8 µm and a specific surface area of 6.6 m²/g. The carbon layer has an average thickness of 565 nm. The aggregate has a fluorine element content of 21890 ppm. The carbon material in this example was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 1.8.

### Example 21

The nano-silicon-based composite anode material was prepared in substantially the same manner as in Example 5, except that the fluorine content in the aggregate is 50 ppm, and the temperature of the heat treatment in step 2) was 980°C. The carbon material in this example was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 2.1.

### Example 22

The nano-silicon-based composite anode material was prepared in substantially the same manner as in Example 5, except that the fluorine content in the aggregate is 39 ppm, and then a heat treatment was performed.

The anode material prepared by this example includes an aggregate, and a carbon layer coated on the surface of the aggregate, where the aggregate includes silicon powder, a carbon material, and fluorine element, and a mass ratio of the silicon powder and the carbon material is 62.5:37.5. The anode material has a median particle diameter of 12.8 µm and a specific surface area of 5.9 m²/g. The carbon layer has an average thickness of 549 nm. The aggregate has a fluorine element content of 39 ppm. The carbon material in this example was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 2.31.

### Example 23

The nano-silicon-based composite anode material was prepared in substantially the same manner as in Example 1, except that the dopant used was triphenyl phosphine, and the content of the dopant element was the same as in Example 1. The carbon material in this example was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 2.1.

### Example 24

The nano-silicon-based composite anode material was prepared in substantially the same manner as in Example 1, except that the dopant used was tetraphenyl phosphonium bromide, and the content of the dopant element was the same as in Example 1. The I_{D}/I_{G} of this example is 2.05.

### Example 25

The nano-silicon-based composite anode material was prepared in substantially the same manner as in Example 1, except that the dopant used was lithium nitride, and the content of the dopant element was the same as in Example 1. The carbon material in this example was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 1.9.

### Example 26

The nano-silicon-based composite anode material was prepared in substantially the same manner as in Example 1, except that the dopant used was thiourea, and the content of the dopant element was the same as in Example 1. The carbon material in this example was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 1.85.

### Comparative Example 1

The nano-silicon-based composite anode material was prepared in substantially the same manner as in Example 1, except that the mixing was directly performed without the fluoride, and then a heat treatment was performed.

The anode material prepared by this example includes an aggregate, and a carbon layer coated on the surface of the aggregate, where the aggregate includes silicon powder and a carbon material, and a mass ratio of the silicon powder and the carbon material is 63.3:36.7. The anode material has a median particle diameter of 13.5 µm and a specific surface area of 6.3 m²/g. The carbon layer has an average thickness of 561 nm. The aggregate has a fluorine element content of 0 ppm. The carbon materials in this comparative example was shown in a Raman spectrum obtained by Raman spectroscopy using a measurement light source having a wavelength of 532 nm that a G band was observed at 1530 cm⁻¹ to 1630 cm⁻¹, and a D band was observed at 1280 cm⁻¹ to 1380 cm⁻¹, and a ratio I_{D} /I_{G} of between peak intensity I_{D} of the D band and peak intensity I_{G} of the G band is 2.5.

### Performance Test

Electrochemical cycling performance was tested as following: dissolving the anode material prepared in Examples 1 to 26 and Comparative Example 1, a conductive agent, and a binders in a mass percent of 94:1:5 in a solvent for mixing, controlling solid content to be 50%, then applying to a copper foil current collector, vacuum drying, to prepare an anode pole piece; and then assembling a 18650 cylindrical single cell by conventional production process by further using a ternary cathode pole piece prepared by a conventional production process, 1mol/L of electrolyte including LiPF₆/ethyl cellulose + dimethyl carbonate + methyl ethyl carbonate (v/v=1:1:1), Celgard 2400 separator, and shell. The charge and discharge testing of the cylindrical battery was performed by a LAND cell test system produced by Wuhan Jinnuo Electronics Co., Ltd, under room temperature conditions, charging and discharging at 0.2C constant current, and the charge and discharge voltage was controlled to 2.75 V to 4.2 V, thus obtaining the initial reversible capacity, the initial charging capacity and the initial discharge capacity. The initial Coulombic efficiency = the initial discharge capacity / the initial charge capacity.

The cycling was repeated for 50 times. The lithium ion battery was measured the thickness H1 of the pole piece at this time using a micrometer, the expansion ratio after 50 cycles = (H1-H0)/H0×100%.

The cycling was repeated for 100 times. The discharge capacity was recorded as the remaining capacity of lithium ion battery; the capacity retention rate = the remaining capacity / the initial capacity * 100%.

Test density of anode material: A empty bottle was weighed as mass m, which was filled with distilled water, and weighed at this time as mass m1; then the bottle was washed, dried, added a certain amount of anode material, and recorded the total mass at this time as m2, then added distilled water for full filled, the mass was weighed as m3. The volume of the bottle V1 = (m1-m)/ρ_{water}, the volume of the anode material v2 = V1-(m3-m2)/ρ_{water}, test density of the anode material ρ1 = (m2-m)/v2, where ρ_{water} was the density of distilled water.

The results of the performance test are as follows:

**Table 1 Table of performance comparison results**

| | F Content (ppm) | Initial Reversible Capacity (mAh/g) | Initial Coulombic Efficiency (%) | Capacity Retention Rate at 100 Cycles (%) | Expansion Ratio after 50 Cycles (%) | Porosity of the Aggregate (%) | Pore Volume of the Carbon Material (cm³/g) |
|---|---|---|---|---|---|---|---|
| Example 1 | 600 | 1762 | 87.6 | 91.0 | 41.7 | 10.6 | 0.35 |
| Example 2 | 920 | 1582 | 87.8 | 95.6 | 35.1 | 5.5 | 0.69 |
| Example 3 | 1030 | 1741 | 87.1 | 92.1 | 39.1 | 8.8 | 0.58 |
| Example 4 | 590 | 1555 | 87.1 | 93.3 | 35.9 | 6.9 | 0.65 |
| Example 5 | 15060 | 1471 | 89.5 | 93.5 | 32.5 | 2.0 | 0.72 |
| Example 6 | 9620 | 1311 | 89.2 | 93.9 | 33.6 | 3.1 | 0.61 |
| Example 7 | 600 | 1710 | 87.9 | 92.9 | 40.2 | 4.4 | 0.41 |
| Example 8 | 8040 | 1701 | 88.0 | 92.8 | 39.9 | 4.3 | 0.58 |
| Example 9 | 602 | 1699 | 87.5 | 92.1 | 40.3 | 11.5 | 0.57 |
| Example 10 | 605 | 1692 | 88.1 | 93.5 | 37.3 | 3.6 | 0.63 |
| Example 11 | 601 | 1704 | 86.4 | 92.1 | 39.0 | 10.2 | 0.52 |
| Example 12 | 608 | 1689 | 87.0 | 93.8 | 36.4 | 5.0 | 0.56 |
| Example 13 | 600 | 1700 | 87.8 | 92.5 | 40.0 | 10.7 | 0.39 |
| Example 14 | 610 | 1679 | 87.8 | 93.9 | 36.1 | 4.5 | 0.68 |
| Example 15 | 590 | 1688 | 88.0 | 93.1 | 38.5 | 12.9 | 0.64 |
| Example 16 | 598 | 1698 | 88.3 | 94.0 | 35.6 | 10.9 | 0.67 |
| Example 17 | 2190 | 1691 | 87.2 | 91.9 | 40.6 | 7.9 | 0.46 |
| Example 18 | 890 | 1767 | 85.2 | 85.0 | 48.8 | 14.1 | 0.37 |
| Example 19 | 20000 | 1401 | 84.5 | 89.5 | 37.5 | 6.9 | 0.648 |
| Example 20 | 21890 | 1259 | 86.1 | 87.7 | 53.1 | 15.5 | 0.450 |
| Example 21 | 50 | 1421 | 86.5 | 90.5 | 38.5 | 3.9 | 0.57 |
| Example 22 | 39 | 1651 | 85.5 | 85.5 | 56.5 | 11.5 | 0.36 |
| Example 23 | 778 | 1712 | 87.0 | 91.1 | 41.4 | 8.8 | 0.45 |
| Example 24 | 899 | 1682 | 87.1 | 91.6 | 41.1 | 7.5 | 0.48 |
| Example 25 | 1211 | 1702 | 87.9 | 92.1 | 40.7 | 7.2 | 0.41 |
| Example 26 | 1098 | 1711 | 87.6 | 92.0 | 40.4 | 5.9 | 0.43 |
| Comparative Example 1 | 0 | 1759 | 85.1 | 85.7 | 55.1 | 19.6 | 0.29 |

As shown in Table 1, the anode materials prepared in Examples 1 to 26, by incorporating a dopant element into the aggregate, can achieve a carbon material with higher degree of graphitization, thereby increasing the conductivity of the anode material, and thereby providing space for silicon expansion, and reducing the volume expansion effect of silicon,.

Example 19 added a fluorine-containing component has a fluorine content higher than 20000 ppm, the initial efficiency, the expansion rate, and the cycle life are not as good as the present application, thus the performances are degraded.

Example 22 added a fluorine-containing component has a fluorine content less than 50 ppm, and its graphitization of carbon material is poor, such that the initial efficiency, expansion rate, cycle life of the pole piece made with the prepared anode active material are not as good as the present application, thus the performances are degraded.

The anode material in Comparative Example 1 is prepared without fluoride. The initial columbic efficiency and the cycle capacity retention rate of the anode material is decreased.

The applicant declares that the present application uses the above-mentioned examples to illustrate the detailed process equipment and process flow of the present application, but the present application is not limited to the above-mentioned detailed process devices and process flow, that is, the implementation of the present application does not necessarily rely on the above-mentioned detailed process devices and process flow. It should be apparent to those skilled in the art that any modifications to the present application, additions of equivalent alterations and ancillary components to various materials of the present application, selection of a specific manner, and the like, are within the scope and disclosure of the present application.

## Claims

1. An anode material comprising an aggregate, the aggregate comprises an active material, a carbon material, and a dopant element; wherein the carbon material is shown in a Raman spectrum obtained by Raman spectroscopy using a measurement light source having a wavelength of 532 nm that a G band is observed at 1530 cm⁻¹ to 1630 cm⁻¹, and a D band is observed at 1280 cm⁻¹ to 1380 cm⁻¹, and a ratio I_{D}/I_{G} of between peak intensity I_{D} of the D band and peak intensity I_{G} of the G band is 1 to 2.5, and **characterized in that** the anode material has a specific surface area of ≤ 10 m²/g tested by using a Micromeritics specific surface area analyzer.

2. The anode material according to claim 1, **characterized in that** the anode material comprises at least one of the following features (1) to (8):
(1) the dopant element comprises at least one of fluorine, nitrogen, and phosphorous;
(2) at least one of the active material and the carbon material contains the dopant element;
(3) the dopant element is distributed on at least one of surface and inside of the active material;
(4) the dopant element is distributed on at least one of surface and inside of the carbon material;
(5) a content of the dopant element in the aggregate is 50 ppm to 20000 ppm;
(6) pores are formed among the carbon materials, and at least a portion of the active material is filled in the pores;
(7) the carbon material has a pore volume of ≥0.35 cm³/g; and
(8) the active material is distributed among the carbon materials or on surface of the carbon material.

3. The anode material according to claim 1 or 2, **characterized in that** the anode material comprises at least one of the following features (1) to (5):
(1) the active material comprises an active particle;
(2) the active material comprises at least one of Li, Na, K, Sn, Ge, Si, Fe, Mg, Ti, Zn, Al, P, Cu, and SiOₓ, wherein 0<x≤2;
(3) the active material has a median particle diameter of 1 nm to 300 nm;
(4) the carbon material comprises at least one of crystalline carbon, noncrystalline carbon, artificial graphite, natural graphite, soft carbon, hard carbon, amorphous carbon, carbon nanotubes, carbon fiber, and graphene; and
(5) a mass ratio of the active material to the carbon material is (90 to 10):(10 to 90).

4. The anode material according to claim 2, **characterized in that** the aggregate further comprises a metal oxide, and the metal oxide comprises at least one of the following features (1) to (7):
(1) at least a portion of the metal oxide is filled in the pores among the carbon materials;
(2) the metal oxide has a chemical formula of MₓO_{y}, 0.2≤y/x≤3, wherein M comprises at least one of Sn, Ge, Si, Fe, Cu, Ti, Na, Mg, Al, Ca, and Zn;
(3) the metal oxide comprises any of GeO₂, SnO₂, ZnO, TiO₂, Fe₃O₄, MgO, SiO₂, and CuO;
(4) a mass ratio of the active material to the metal oxide is (30 to 100):(0.5 to 10);
(5) the metal oxide is in a form of at least one of sheet and strip shape;
(6) the metal oxide has an aspect ratio greater than 2; and
(7) a shortest distance among the metal oxides is ≥100 nm.

5. The anode material according to claim 2, **characterized in that** the aggregate further comprises a conductive enhancer, and the conductive enhancer comprises at least one of the following features (1) to (7):
(1) at least a portion of the conductive enhancer is filled in the pores among the carbon materials;
(2) the conductive enhancer comprises at least one of an alloy material and a conductive carbon;
(3) the conductive enhancer comprises at least one of an alloy material and a conductive carbon, wherein the conductive carbon comprises at least one of carbon nanotube, carbon fiber, and graphite fiber;
(4) the conductive enhancer has a conductivity of 10⁰ S/m to 10⁸ S/m;
(5) the conductive enhancer is in a form of at least one of sheet and strip shape;
(6) a mass ratio of the conductive enhancer to the active material is (0.01 to 15):(50 to 100); and
(7) the conductive enhancer has an aspect ratio of 2 to 5000.

6. The anode material according to any one of claims 1 to 5, **characterized in that** the anode material further comprises a carbon layer coated on at least a portion of the surface of the aggregate, the carbon layer comprises at least one of the following features (1) to (3):
(1) a material of the carbon layer comprises amorphous carbon;
(2) the carbon layer has a thickness of 10 nm to 5000 nm; and
(3) a mass ratio of the aggregate to the carbon layer is (90 to 10):(10 to 90).

7. The anode material according to any one of claims 1 to 5, **characterized in that** the anode material further comprises an oxide layer formed on at least a portion of the surface of the active material, the oxide layer comprises at least one of the following features (1) to (2):
(1) the oxide layer has a thickness of 1 nm to 100 nm; and
(2) the oxide layer has pores.

8. The anode material according to any one of claims 1 to 7, **characterized in that** the anode material comprises at least one of the following features (1) to (4):
(1) the anode material has a median particle diameter of 0.5 µm to 30 µm;
(2) the aggregate has a porosity of ≤10%;
(3) the aggregate has a pressure-resistant hardness of ≥100 MPa; and
(4) density of the aggregate satisfies the following relationship: (ρ2-ρ1)/ρ2≤5%, wherein ρ1 is test density of the aggregate, ρ2 is theoretical density of the aggregate, and ρ2 is a sum of mass percentage of each component in the aggregate * theoretical density of each component.

9. A preparation method of the anode material according to any one of claims 1 to 8, **characterized in that** the preparation method comprises the following:
mixing an active material, a dopant, a first carbon source, and a solvent to prepare a precursor; and
undergoing the precursor a primary heat treatment at 800°C to 980°C to obtain an aggregate.

10. The preparation method according to claim 9, **characterized in that** the preparation method comprises at least one of the following features (1) to (10):
(1) the active material comprises at least one of Li, Na, K, Sn, Ge, Si, Fe, Mg, Ti, Zn, Al, P, Cu, and SiOₓ, wherein 0<x≤2;
(2) the dopant comprises at least one of a fluorine source, a phosphorus source, and a nitrogen source;
(3) the dopant comprises at least one of a fluorine source, a phosphorus source, and a nitrogen source, wherein the fluorine source comprises a fluoride, and the fluoride includes at least one of hydrogen fluoride, lithium fluoride, ammonium fluoride, potassium fluoride, aluminum fluoride, magnesium fluoride, sodium fluoride, calcium fluoride, tetrabutyl ammonium fluoride, triethyl methoxymethyl ammonium fluoride, ammonium fluoroborate, and tetrabutyl ammonium fluoroborate;
(4) the dopant comprises at least one of a fluorine source, a phosphorus source, and a nitrogen source, wherein the phosphorus source comprises at least one of triphenyl phosphine, tetraphenyl phosphonium bromide, 1-butyl-3-methylimidazolium sodium hexafluorophosphate, phosphine, sodium phosphate, sodium phosphite, elemental phosphorus, sodium hydrogen phosphate, sodium dihydrogen phosphate, sodium hydrogen phosphite, and phosphoric acid;
(5) the dopant comprises at least one of a fluorine source, a phosphorus source, and a nitrogen source, wherein the nitrogen source comprises at least one of ammonia, ammonium chloride, ammonium carbonate, ammonium bicarbonate, urea, thiourea, lithium nitride, melamine, and hydrazine hydrate;
(6) the first carbon source comprises at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt;
(7) a mass ratio of the active material, the dopant, and the first carbon source is (30 to 120):(0.9 to 20):(10 to 50);
(8) the solvent comprises organic solvent;
(9) the solvent comprises organic solvent, wherein the organic solvent comprises at least one of ethanol, ethylene glycol, propanol, butanol, and n-pentanol; and
(10) the process of mixing an active material, a dopant, a first carbon source, and a solvent is specifically: dispersing the active material in the solvent and adding the dopant and the first carbon source.

11. The preparation method according to claim 9, **characterized in that** an additive is also added in the process of mixing an active material, a dopant, a first carbon source, and a solvent, and the additive comprises at least one of the following features (1) to (4):
(1) the additive comprises at least one of a surfactant and a coupling agent;
(2) the additive comprises a surfactant, wherein the surfactant comprises at least one of n-octadecanoic acid, lauric acid, polyacrylic acid, sodium dodecyl benzene sulfonate, n-eicosanoic acid, palmitic acid, tetradecanoic acid, undecanoic acid, cetyl trimethyl ammonium bromide, and polyvinyl pyrrolidone;
(3) the additive comprises a coupling agent, wherein the coupling agent comprises silane coupling agent, and the silane coupling includes at least one of γ-aminopropyl triethoxy silane, γ-glycidoxypropyl trimethoxy silane, and γ-methacryloxypropyl trimethoxy silane; and
(4) a mass ratio of the additive to the active material is (0.01 to 5):(50 to 100).

12. The preparation method according to claim 9, **characterized in that** at least one of a metal oxide and a conductive enhancer is also added in the process of mixing an active material, a dopant, a first carbon source, and a solvent, and the preparation method comprises at least one of the following features (1) to (9):
(1) the metal oxide has a chemical formula of MₓO_{y}, 0.2≤y/x≤3, wherein M comprises at least one of Sn, Ge, Si, Fe, Cu, Ti, Na, Mg, Al, Ca, and Zn;
(2) the metal oxide is in a form of at least one of sheet and strip shape;
(3) the metal oxide has an aspect ratio greater than 2;
(4) a mass ratio of the metal oxide to the active material is (0.5 to 10):(30 to 100);
(5) a mass ratio of the conductive enhancer to the active material is (0.01 to 15):(50 to 100);
(6) the conductive enhancer has a conductivity of 10⁰ S/m to 10⁸ S/m;
(7) the conductive enhancer is in a form of at least one of sheet and strip shape;
(8) the conductive enhancer has an aspect ratio of 2 to 5000; and
(9) the conductive enhancer comprises at least one of an alloy material and a conductive carbon.

13. The preparation method according to claim 9, **characterized in that** before undergoing the precursor a primary heat treatment, the preparation method further comprises undergoing the precursor a densification treatment, such that the aggregate has a porosity of ≤10% and a pressure-resistant hardness of ≥100 MPa, and the preparation method comprises at least one of the following features (1) to (5):
(1) the densification treatment comprises at least one of a fusion process, a blending process, a moulding process , an isostatic pressing process, and an impregnation process;
(2) the densification treatment comprises at least one of a fusion process, a blending process, moulding process, an isostatic pressing process, and an impregnation process, wherein the fusion process is mechanical fusion.
(3) the densification treatment comprises at least one of a fusion process, a blending process, moulding process, an isostatic pressing process, and an impregnation process, wherein the fusion process is mechanical fusion, and a rotating speed of fusion machine used for the mechanical fusion is 500 r/min to 3000 r/min;
(4) the densification treatment comprises at least one of a fusion process, a blending process, moulding process, an isostatic pressing process, and an impregnation process, wherein the fusion process is mechanical fusion, and a blade gap width of the fusion machine used for the mechanical fusion is 0.01 cm to 0.5 cm; and
(5) the densification treatment comprises at least one of a fusion process, a blending process, moulding process, an isostatic pressing process, and an impregnation process, wherein the fusion process is mechanical fusion, and a time of the mechanical fusion is at least 0.5 h.

14. A lithium ion battery, **characterized in that** the lithium ion battery comprises an anode material according to any one of claims 1 to 8, or an anode material prepared by the preparation method according to any one of claims 9 to 13.

## Patentansprüche

1. Anodenmaterial, umfassend ein Aggregat, wobei das Aggregat ein aktives Material, ein Kohlenstoffmaterial und ein Dotierelement umfasst; wobei das Kohlenstoffmaterial in einem Raman-Spektrum, das durch Raman-Spektroskopie unter Verwendung einer Messlichtquelle mit einer Wellenlänge von 532 nm erhalten wurde, so dargestellt ist, dass ein G-Band bei 1530 cm⁻¹ bis 1630 cm⁻¹ beobachtet wird, und ein D-Band bei 1280 cm⁻¹ bis 1380 cm⁻¹, beobachtet wird, und ein Verhältnis I_{D}/I_{G} zwischen der Peakintensität I_{D} des D-Bandes und der Peakintensität I_{G} des G-Bandes 1 bis 2,5 beträgt, und
**dadurch gekennzeichnet, dass**
das Anodenmaterial eine spezifische Oberfläche von ≤ 10 m²/g aufweist, getestet unter Verwendung eines Micromeritics-Analysators für die spezifische Oberfläche.

2. Anodenmaterial nach Anspruch 1, **dadurch gekennzeichnet, dass** das Anodenmaterial mindestens eines der folgenden Merkmale (1) bis (8) aufweist:
(1) das Dotierelement umfasst mindestens eines von Fluor, Stickstoff und Phosphor;
(2) mindestens eines von dem aktiven Material und dem Kohlenstoffmaterial enthält das Dotierelement;
(3) das Dotierelement ist auf mindestens einem von der Oberfläche und dem Inneren des aktiven Materials verteilt;
(4) das Dotierelement ist auf mindestens einen von der Oberfläche und dem Inneren des Kohlenstoffmaterials verteilt;
(5) ein Gehalt des Dotierelements in dem Aggregat beträgt 50 ppm bis 20.000 ppm;
(6) zwischen den Kohlenstoffmaterialien sind Poren gebildet, und zumindest ein Teil des aktiven Materials ist in diese Poren gefüllt;
(7) das Kohlenstoffmaterial weist ein Porenvolumen von ≥ 0,35 cm'/g auf; und
(8) das aktive Material zwischen den Kohlenstoffmaterialien oder auf der Oberfläche des Kohlenstoffmaterials verteilt.

3. Anodenmaterial nach Anspruch 1 oder 2, **dadurch gekennzeichnet, dass** das Anodenmaterial mindestens eines der folgenden Merkmale (1) bis (5) umfasst:
(1) das aktive Material umfasst ein aktives Partikel;
(2) das aktive Material umfasst mindestens eines von Li, Na, K, Sn, Ge, Si, Fe, Mg, Ti, Zn, Al, P, Cu und SiOₓ, wobei 0 < x ≤ 2;
(3) das aktive Material weist einen Median-Partikeldurchmesser von 1 nm bis 300 nm auf;
(4) das Kohlenstoffmaterial umfasst mindestens eines von kristallinem Kohlenstoff, nichtkristallinem Kohlenstoff, künstlichem Graphit, natürlichem Graphit, weichem Kohlenstoff, hartem Kohlenstoff, amorphem Kohlenstoff, Kohlenstoffnanoröhren, Kohlenstofffasern und Graphen; und
(5) ein Massenverhältnis des aktiven Materials zu dem Kohlenstoffmaterial beträgt (90 bis 10):(10 bis 90).

4. Anodenmaterial nach Anspruch 2, **dadurch gekennzeichnet, dass** das Aggregat ferner ein Metalloxid umfasst und das Metalloxid mindestens eines der folgenden Merkmale (1) bis (7) umfasst:
(1) mindestens ein Teil des Metalloxids füllt die Poren zwischen den Kohlenstoffmaterialien aus;
(2) das Metalloxid hat die chemische Formel MₓO_{y}, wobei 0,2 ≤ y/x ≤ 3 gilt und M mindestens eines der Elemente Sn, Ge, Si, Fe, Cu, Ti, Na, Mg, Al, Ca und Zn umfasst;
(3) das Metalloxid umfasst eines der folgenden: GeO₂, SnO₂, ZnO, TiO₂, Fe₃O₄, MgO, SiO₂, und CuO;
(4) das Massenverhältnis des aktiven Materials zum Metalloxid beträgt (30 bis 100):(0,5 bis 10);
(5) das Metalloxid liegt in Form von mindestens einem der folgenden vor: als Folie oder als Band;
(6) das Metalloxid weist ein Seitenverhältnis von mehr als 2 auf; und
(7) der kürzeste Abstand zwischen den Metalloxiden beträgt ≥ 100 nm.

5. Anodenmaterial nach Anspruch 2, **dadurch gekennzeichnet, dass** das Aggregat ferner einen Leitfähigkeitsverstärker umfasst und der Leitfähigkeitsverstärker mindestens eines der folgenden Merkmale (1) bis (7) aufweist:
(1) mindestens ein Teil des Leitfähigkeitsverstärkers ist in die Poren zwischen den Kohlenstoffmaterialien gefüllt;
(2) der Leitfähigkeitsverstärker umfasst mindestens eines von einem Legierungsmaterial und einem leitfähigen Kohlenstoff;
(3) der Leitfähigkeitsverstärker umfasst mindestens eines von einem Legierungsmaterial und einem leitfähigen Kohlenstoff, wobei der leitfähige Kohlenstoff mindestens eines von Kohlenstoffnanoröhren, Kohlenstofffasern und Graphitfasern umfasst;
(4) der Leitfähigkeitsverstärker weist eine Leitfähigkeit von 10⁰S/m bis 10⁸S/m auf;
(5) der Leitfähigkeitsverstärker liegt in Form von mindestens einem von Folie und Streifenform vor;
(6) ein Massenverhältnis des Leitfähigkeitsverstärkers zu dem aktiven Material beträgt (0,01 bis 15):(50 bis 100); und
(7) der Leitfähigkeitsverstärker weist ein Seitenverhältnis von 2 bis 5000 auf.

6. Anodenmaterial nach einem der Ansprüche 1 bis 5, **dadurch gekennzeichnet, dass** das Anodenmaterial ferner eine Kohlenstoffschicht umfasst, die auf mindestens einen Teil der Oberfläche des Aggregats aufgebracht ist, wobei die Kohlenstoffschicht mindestens eines der folgenden Merkmale (1) bis (3) umfasst:
(1) ein Material der Kohlenstoffschicht umfasst amorphen Kohlenstoff;
(2) die Kohlenstoffschicht weist eine Dicke von 10 nm bis 5000 nm auf; und
(3) ein Massenverhältnis des Aggregats zu der Kohlenstoffschicht beträgt (90 bis 10):(10 bis 90).

7. Anodenmaterial nach einem der Ansprüche 1 bis 5, **dadurch gekennzeichnet, dass** das Anodenmaterial ferner eine Oxidschicht umfasst, die auf mindestens einem Teil der Oberfläche des aktiven Materials ausgebildet ist, wobei die Oxidschicht mindestens eines der folgenden Merkmale (1) bis (2) umfasst:
(1) die Oxidschicht weist eine Dicke von 1 nm bis 100 nm auf; und
(2) die Oxidschicht weist Poren auf.

8. Anodenmaterial nach einem der Ansprüche 1 bis 7, **dadurch gekennzeichnet, dass** das Anodenmaterial mindestens eines der folgenden Merkmale (1) bis (4) umfasst:
(1) das Anodenmaterial weist einen Median-Partikeldurchmesser von 0,5 µm bis 30 µm auf;
(2) das Aggregat weist eine Porosität von ≤ 10 % auf;
(3) das Aggregat weist eine druckfeste Härte von ≥ 100 MPa auf; und
(4) die Dichte des Aggregats erfüllt die folgende Beziehung: (ρ2 - ρ1)/ρ2 ≤ 5 %, wobei ρ1 die Testdichte des Aggregats, ρ2 die theoretische Dichte des Aggregats ist und ρ2 eine Summe aus dem Massenanteil jeder Komponente in dem Aggregat * der theoretischen Dichte jeder Komponente ist.

9. Herstellungsverfahren des Anodenmaterials gemäß einem der Ansprüche 1 bis 8, **dadurch gekennzeichnet, dass** das Herstellungsverfahren Folgendes umfasst:
Mischen eines aktiven Materials, eines Dotierungsmittels, einer ersten Kohlenstoffquelle und eines Lösungsmittels zur Herstellung eines Vorläufers; und
Durchführen einer ersten Wärmebehandlung des Vorläufers bei 800 °C bis 980 °C, um ein Aggregat zu erhalten.

10. Herstellungsverfahren nach Anspruch 9, **dadurch gekennzeichnet, dass** das Herstellungsverfahren mindestens eines der folgenden Merkmale (1) bis (10) umfasst:
(1) das aktive Material umfasst mindestens eines von Li, Na, K, Sn, Ge, Si, Fe, Mg, Ti, Zn, Al, P, Cu und SiOₓ, wobei 0 < x ≤ 2;
(2) das Dotierungsmittel umfasst mindestens eines von einer Fluorquelle, einer Phosphorquelle und einer Stickstoffquelle;
(3) das Dotierungsmittel umfasst mindestens eines von einer Fluorquelle, einer Phosphorquelle und einer Stickstoffquelle, wobei die Fluorquelle ein Fluorid umfasst und das Fluorid mindestens eines von Fluorwasserstoff, Lithiumfluorid, Ammoniumfluorid, Kaliumfluorid, Aluminiumfluorid, Magnesiumfluorid, Natriumfluorid, Calciumfluorid, Tetrabutylammoniumfluorid, Triethylmethoxymethylammoniumfluorid, Ammoniumfluoroborat und Tetrabutylammoniumfluoroborat enthält;
(4) das Dotierungsmittel umfasst mindestens eine von einer Fluorquelle, einer Phosphorquelle und einer Stickstoffquelle, wobei die Phosphorquelle mindestens eines von Triphenylphosphin, Tetraphenylphosphoniumbromid, 1-Butyl-3-methylimidazolium-Natriumhexafluorophosphat, Phosphin, Natriumphosphat, Natriumphosphit, elementarem Phosphor, Natriumhydrogenphosphat, Natriumdihydrogenphosphat, Natriumhydrogenphosphit und Phosphorsäure umfasst;
(5) das Dotierungsmittel umfasst mindestens eines von einer Fluorquelle, einer Phosphorquelle und einer Stickstoffquelle, wobei die Stickstoffquelle mindestens eines der von Ammoniak, Ammoniumchlorid, Ammoniumcarbonat, Ammoniumbicarbonat, Harnstoff, Thioharnstoff, Lithiumnitrid, Melamin und Hydrazinhydrat umfasst;
(6) die erste Kohlenstoffquelle umfasst mindestens eines von Saccharose, Glukose, Polyethylen, Polyvinylalkohol, Polyethylenglykol, Polyanilin, Epoxidharz, Phenolharz, Furfuralharz, Acrylharz, Polyethylenoxid, Polyvinylidenfluorid, Polyacrylnitril, Polyvinylchlorid und Asphalt;
(7) ein Massenverhältnis des aktiven Materials, des Dotierungsmittels und der Kohlenstoffquelle beträgt (30 bis 120):(0,9 bis 20):(10 bis 50);
(8) das Lösungsmittel umfasst ein organisches Lösungsmittel;
(9) das Lösungsmittel umfasst ein organisches Lösungsmittel, wobei das organische Lösungsmittel mindestens eines von Ethanol, Ethylenglykol, Propanol, Butanol und n-Pentanol umfasst; und
(10) das Verfahren zum Mischen eines aktiven Materials, eines Dotierungsmittels, einer ersten Kohlenstoffquelle und eines Lösungsmittels ist spezifisch: Dispergieren des aktiven Materials in dem Lösungsmittel und Hinzuzufügen des Dotierungsmittels sowie der ersten Kohlenstoffquelle.

11. Herstellungsverfahren nach Anspruch 9, **dadurch gekennzeichnet, dass** bei dem Verfahren zum Mischen eines aktiven Materials, eines Dotierungsmittels, einer ersten Kohlenstoffquelle und eines Lösungsmittels zudem ein Additiv zugegeben wird und das Additiv mindestens eines der folgenden Merkmale (1) bis (4) umfasst:
(1) das Additiv umfasst mindestens eines aus einem Tensid und einem Haftvermittler;
(2) das Additiv umfasst ein Tensid, wobei das Tensid mindestens eines von n-Octadecansäure, Laurinsäure, Polyacrylsäure, Natriumdodecylbenzolsulfonat, n-Eicosansäure, Palmitinsäure, Tetradecansäure, Undecansäure, Cetyltrimethylammoniumbromid und Polyvinylpyrrolidon umfasst;
(3) das Additiv umfasst ein Haftvermittler, wobei der Haftvermittler Silan-Haftvermittler umfasst und der Silan-Haftvermittler mindestens eines von γ-Aminopropyltriethoxysilan, γ-Glycidoxypropyltrimethoxysilan und γ-Methacryloxypropyltrimethoxysilan enthält; und
(4) ein Massenverhältnis des Additivs zu dem aktiven Material beträgt (0,01 bis 5):(50 bis 100).

12. Herstellungsverfahren nach Anspruch 9, **dadurch gekennzeichnet, dass** beim Mischen eines aktiven Materials, eines Dotierungsmittels, einer ersten Kohlenstoffquelle und eines Lösungsmittels zusätzlich mindestens eines von einem Metalloxid und einem Leitfähigkeitsverstärker zugegeben wird und das Herstellungsverfahren mindestens eines der folgenden Merkmale (1) bis (9) umfasst:
(1) das Metalloxid hat eine chemische Formel MₓO_{y}, 0,2 ≤ y/x ≤ 3, wobei M mindestens eines von Sn, Ge, Si, Fe, Cu, Ti, Na, Mg, Al, Ca und Zn umfasst;
(2) das Metalloxid liegt in Form von mindestens einem von Folie und Streifenform vor;
(3) das Metalloxid weist ein Seitenverhältnis von mehr als 2 auf;
(4) ein Massenverhältnis des Metalloxids zu dem aktiven Material beträgt (0,5 bis 10):(30 bis 100);
(5) ein Massenverhältnis des Leitfähigkeitsverstärkers zu dem aktiven Material beträgt (0,01 bis 15):(50 bis 100);
(6) der Leitfähigkeitsverstärker weist eine Leitfähigkeit von 10⁰S/m bis 10⁸S/m auf;
(7) der Leitfähigkeitsverstärker liegt in Form von mindestens einem von einer Folie und einer Streifenform vor;
(8) der Leitfähigkeitsverstärker weist ein Seitenverhältnis von 2 bis 5000 auf; und
(9) der Leitfähigkeitsverstärker umfasst mindestens eines von einem Legierungsmaterial und einem leitfähigen Kohlenstoff.

13. Herstellungsverfahren nach Anspruch 9, **dadurch gekennzeichnet, dass** das Herstellungsverfahren, bevor der Vorläufer einer ersten Wärmebehandlung unterzogen wird, ferner das Unterziehen des Vorläufers einer Verdichtungsbehandlung umfasst, so dass das Aggregat eine Porosität von ≤ 10 % und eine druckfeste Härte von ≥ 100 MPa aufweist, und das Herstellungsverfahren mindestens eines der folgenden Merkmale (1) bis (5) umfasst:
(1) die Verdichtungsbehandlung umfasst mindestens eines von einem Schmelzverfahren, einem Mischverfahren, einem Formverfahren, einem isostatischen Pressverfahren und einem Imprägnierverfahren;
(2) Die Verdichtungsbehandlung umfasst mindestens eines von einem Schmelzverfahren, einem Mischverfahren, einem Formverfahren, einem isostatisches Pressverfahren und einem Imprägnierverfahren, wobei das Schmelzverfahren mechanische Verschmelzung ist.
(3) Die Verdichtungsbehandlung umfasst mindestens eines von einem Schmelzverfahren, einem Mischverfahren, einem Formverfahren, einem isostatisches Pressverfahren und einem Imprägnierverfahren, wobei das Schmelzverfahren eine mechanische Verschmelzung ist und eine Drehzahl der für die mechanische Verschmelzung verwendeten Schmelzmaschine 500 U/min bis 3000 U/min beträgt;
(4) die Verdichtungsbehandlung umfasst mindestens eines von einem Schmelzverfahren, einem Mischverfahren, einem Formverfahren, einem isostatischen Pressverfahren und einem Imprägnierverfahren, wobei das Schmelzverfahren eine mechanische Verschmelzung ist und eine Spaltbreite der für die mechanische Verschmelzung verwendeten Schmelzmaschine 0,01 cm bis 0,5 cm beträgt; und
(5) Die Verdichtungsbehandlung umfasst mindestens eines von einem Schmelzverfahren, einem Mischverfahren, einem Formverfahren, einem isostatischen Pressverfahren und einem Imprägnierverfahren, wobei das Schmelzverfahren eine mechanische Verschmelzung ist und die Dauer der mechanischen Verschmelzung mindestens 0,5 h beträgt.

14. Lithium-Ionen-Batterie, **dadurch gekennzeichnet, dass** die Lithium-Ionen-Batterie ein Anodenmaterial gemäß einem der Ansprüche 1 bis 8 oder ein Anodenmaterial umfasst, das durch das Herstellungsverfahren gemäß einem der Ansprüche 9 bis 13 hergestellt wurde.

## Revendications

1. Matériau d'anode comprenant un agrégat, l'agrégat comprenant un matériau actif, un matériau de carbone, et un élément dopant ; dans lequel le matériau de carbone est apparent dans un spectre Raman obtenu par spectroscopie Raman en utilisant une source de lumière de mesure ayant une longueur d'ondes de 532 nm où une bande G est observée de 1530 cm⁻¹ à 1630 cm⁻¹, et une bande D est observée de 1280 cm⁻¹ à 1380 cm⁻¹, et un rapport I_{D}/I_{G} d'une intensité de pic I_{D} de la bande D et d'une intensité de pic I_{G} de la bande G est de 1 à 2,5, et **caractérisé en ce que** le matériau d'anode a une surface spécifique de ≤ 10 m²/g testé en utilisant un analyseur de surface spécifique Micromeritics.

2. Matériau d'anode selon la revendication 1, **caractérisé en ce que** le matériau d'anode comprend au moins l'une des caractéristiques suivantes (1) à (8) :
(1) l'élément dopant comprend au moins un élément parmi le fluor, l'azote et le phosphore ;
(2) au moins un élément parmi le matériau actif et le matériau de carbone contient l'élément dopant ;
(3) l'élément dopant est distribué sur au moins un élément parmi une surface et l'intérieur du matériau actif ;
(4) l'élément dopant est distribué sur au moins un élément parmi une surface et l'intérieur du matériau de carbone ;
(5) une teneur en l'élément dopant dans l'agrégat est de 50 ppm à 20 000 ppm ;
(6) des pores sont formés parmi les matériaux de carbone, et au moins une partie du matériau actif est chargée dans les pores ;
(7) le matériau de carbone a un volume de pore de ≥ 0,35 cm³/g ; et
(8) le matériau actif est distribué entre les matériaux de carbone ou à la surface du matériau de carbone.

3. Matériau d'anode selon la revendication 1 ou 2, **caractérisé en ce que** le matériau d'anode comprend au moins l'une des caractéristiques suivantes (1) à (5) :
(1) le matériau actif comprend une particule active ;
(2) le matériau actif comprend au moins un élément parmi Li, Na, K, Sn, Ge, Si, Fe, Mg, Ti, Zn, Al, P, Cu et SiOₓ, où 0 < x ≤ 2 ;
(3) le matériau actif a un diamètre médian de particule de 1 nm à 300 nm ;
(4) le matériau de carbone comprend au moins un élément parmi le carbone cristallin, le carbone monocristallin, le graphite artificiel, le graphite naturel, le carbone mou, le carbone dur, le carbone amorphe, les nanotubes de carbone, la fibre de carbone et le graphène ; et
(5) un rapport massique du matériau actif sur le matériau de carbone est de (90 à 10) : (10 à 90).

4. Matériau d'anode selon la revendication 2, **caractérisé en ce que** l'agrégat comprend en outre un oxyde métallique, et l'oxyde métallique comprend au moins l'une des caractéristiques suivantes (1) à (7) :
(1) au moins une partie de l'oxyde métallique est chargée dans les pores entre les matériaux de carbone ;
(2) l'oxyde métallique a une formule chimique de MₓO_{y}, 0,2 ≤ y/x ≤ 3, où M comprend au moins un élément parmi Sn, Ge, Si, Fe, Cu, Ti, Na, Mg, Al, Ca et Zn ;
(3) l'oxyde métallique comprend un élément quelconque parmi GeO₂, SnO₂, ZnO, TiO₂, Fe₃O₄, MgO, SiO₂, et CuO ;
(4) un rapport massique du matériau actif sur l'oxyde métallique est de (30 à 100) : (0,5 à 10) ;
(5) l'oxyde métallique se présente sous une forme d'une feuille et/ou d'une bande ;
(6) l'oxyde métallique présente un rapport d'aspect supérieur à 2 ; et
(7) une distance la plus courte entre les oxydes métalliques est de ≥ 100 nm.

5. Matériau d'anode selon la revendication 2, **caractérisé en ce que** l'agrégat comprend un amplificateur de conductivité et l'amplificateur de conductivité comprend au moins l'une des caractéristiques suivantes (1) à (7) :
(1) au moins une partie de l'amplificateur de conductivité est chargé dans les pores entre les matériaux de carbone ;
(2) l'amplificateur de conductivité comprend un matériau d'alliage et/ou un carbone conducteur ;
(3) l'amplificateur de conductivité comprend un matériau d'alliage et/ou un carbone conducteur, où le carbone conducteur comprend au moins un élément parmi le nanotube de carbone, la fibre de carbone et la fibre de graphite ;
(4) l'amplificateur de conductivité présente une conductivité de 10⁰ S/m à 10⁸ S/m ;
(5) l'amplificateur de conductivité se présente sous une forme d'une feuille et/ou d'une bande ;
(6) un rapport massique de l'amplificateur de conductivité sur le matériau actif est de (0,01 à 15) : (50 à 100) ; et
(7) l'amplificateur de conductivité présente un rapport d'aspect de 2 à 5000.

6. Matériau d'anode selon l'une quelconque des revendications 1 à 5, **caractérisé en ce que** le matériau d'anode comprend en outre une couche de carbone déposée sur au moins une partie de la surface de l'agrégat, la couche de carbone comprend au moins l'une des caractéristiques suivantes (1) à (3) :
(1) un matériau de la couche de carbone comprend du carbone amorphe ;
(2) la couche de carbone possède une épaisseur de 10 nm à 5000 nm ; et
(3) un rapport massique de l'agrégat sur la couche de carbone est de (90 à 10) : (10 à 90).

7. Matériau d'anode selon l'une quelconque des revendications 1 à 5, **caractérisé en ce que** le matériau d'anode comprend en outre une couche d'oxyde formée sur au moins une partie de la surface du matériau actif, la couche d'oxyde comprend au moins l'une des caractéristiques suivantes (1) à (2) :
(1) la couche d'oxyde possède une épaisseur de 1 nm à 100 nm ; et
(2) la couche d'oxyde présente des pores.

8. Matériau d'anode selon l'une quelconque des revendications 1 à 7, **caractérisé en ce que** le matériau d'anode comprend au moins l'une des caractéristiques suivantes (1) à (4) :
(1) le matériau d'anode a un diamètre médian de particule de 0,5 µm à 30 µm ;
(2) l'agrégat présente une porosité de ≤ 10 % ;
(3) l'agrégat possède une dureté résistante à la pression de ≥ 100 MPa ; et
(4) la densité de l'agrégat répond à la relation suivante : (ρ2 - ρ1) / ρ2 ≤ 5 %, où ρ1 est une densité test de l'agrégat, ρ2 est la densité théorique de l'agrégat, et ρ2 est une somme du pourcentage en masse de chaque composant dans l'agrégat * densité théorique de chaque composant.

9. Procédé de préparation du matériau d'anode selon l'une quelconque des revendications 1 à 8, **caractérisé en ce que** le procédé de préparation comprend les étapes suivantes de :
mélange d'un matériau actif, d'un élément dopant, d'une première source de carbone et d'un solvant pour préparer un précurseur ; et
soumission du précurseur à un traitement thermique primaire à une température de 800°C à 980°C pour obtenir un agrégat.

10. Procédé de préparation selon la revendication 9, **caractérisé en ce que** le procédé de préparation comprend au moins l'une des caractéristiques suivantes (1) à (10) :
(1) le matériau actif comprend au moins un élément parmi Li, Na, K, Sn, Ge, Si, Fe, Mg, Ti, Zn, Al, P, Cu et SiOₓ, où 0 < x ≤ 2 ;
(2) l'élément dopant comprend au moins un élément parmi une source de fluor, une source de phosphore et une source d'azote ;
(3) l'élément dopant comprend au moins un élément parmi une source de fluor, une source de phosphore et une source d'azote, où la source de fluor comprend un fluorure, et le fluorure comprend au moins un élément parmi le fluorure d'hydrogène, le fluorure de lithium, le fluorure d'ammonium, le fluorure de potassium, le fluorure d'aluminium, le fluorure de magnésium, le fluorure de sodium, le fluorure de calcium, le fluorure de tétrabutyl ammonium, le fluorure de triéthyl méthoxyméthyl ammonium, le fluoroborate d'ammonium et le fluoroborate de tétrabutyl ammonium ;
(4) l'élément dopant comprend au moins un élément parmi une source de fluor, une source de phosphore et une source d'azote, où la source de phosphore comprend au moins un élément parmi la triphényl phosphine, le bromure de tétraphényl phosphonium, l'hexafluorophosphate sodique de 1-butyl-3-méthylimidazolium, la phosphine, le phosphate de sodium, le phosphite de sodium, le phosphore élémentaire, l'hydrogénophosphate de sodium, le dihydrogénophosphate de sodium, l'hydrogénophosphite de sodium, et l'acide phosphorique ;
(5) l'élément dopant comprend au moins un élément parmi une source de fluor, une source de phosphore et une source d'azote, où la source d'azote comprend au moins un élément parmi l'ammoniac, le chlorure d'ammonium, le carbonate d'ammonium, le bicarbonate d'ammonium, l'urée, la thiourée, le nitrure de lithium, la mélamine, l'hydrate d'hydrazine ;
(6) la première source de carbone comprend au moins un élément parmi le saccharose, le glucose, le polyéthylène, l'alcool polyvinylique, le polyéthylène glycol, la polyaniline, la résine époxy, la résine phénolique, la résine de furfural, la résine acrylique, l'oxyde de polyéthylène, le fluorure de polyvinylidène, le polyacrylonitrile, le chlorure de polyvinyle et l'asphalte ;
(7) un rapport massique du matériau actif, de l'élément dopant et de la première source de carbone est de (30 à 120) : (0,9 à 20) : (10 à 50) ;
(8) le solvant comprend un solvant organique ;
(9) le solvant comprend un solvant organique, où le solvant organique comprend au moins un élément parmi l'éthanol, l'éthylène glycol, le propanol, le butanol, et le n-pentanol ; et
(10) le procédé de mélange d'un matériau actif, d'un élément dopant, d'une première source de carbone et d'un solvant est spécifiquement : la dispersion du matériau actif dans le solvant et l'ajout de l'élément dopant et de la première source de carbone.

11. Procédé de préparation selon la revendication 9, **caractérisé en ce qu'**un additif est aussi ajouté dans le procédé de mélange d'un matériau actif, d'un élément dopant, d'une première source de carbone, et d'un solvant, et l'additif comprend au moins l'une des caractéristiques suivantes (1) à (4) :
(1) l'additif comprend au moins un élément parmi un tensioactif et un agent de couplage ;
(2) l'additif comprend un tensioactif, où le tensioactif comprend au moins un élément parmi l'acide n-octadécanoïque, l'acide laurique, l'acide polyacrylique, le dodécyl benzène sulfonate de sodium, l'acide n-éicosanoïque, l'acide palmitique, l'acide tétradécanoïque, l'acide undécanoïque, le bromure de cétyl triméthyl ammonium et la polyvinyl pyrrolidone ;
(3) l'additif comprend un agent de couplage, où l'agent de couplage comprend un agent de couplage au silane et l'agent de couplage au silane comprend au moins un élément parmi le γ-aminopropyl triéthoxysilane, le γ-glycidoxypropyl triméthoxysilane et le γ-méthacryloxypropyl triméthoxysilane ; et
(4) un rapport massique de l'additif sur le matériau actif est de (0,01 à 5) : (50 à 100).

12. Procédé de préparation selon la revendication 9, **caractérisé en ce qu'**au moins un élément parmi un oxyde métallique et un amplificateur de conductivité est aussi ajouté dans le procédé de mélange d'un matériau actif, d'un élément dopant, d'une première source de carbone, et d'un solvant, et le procédé de préparation comprend au moins l'une des caractéristiques suivantes (1) à (9) :
(1) l'oxyde métallique a une formule chimique de MₓO_{y}, 0,2 ≤ y/x ≤ 3, où M comprend au moins un élément parmi Sn, Ge, Si, Fe, Cu, Ti, Na, Mg, Al, Ca et Zn ;
(2) l'oxyde métallique se présente sous une forme d'une feuille et/ou une bande ;
(3) l'oxyde métallique présente un rapport d'aspect supérieur à 2 ;
(4) un rapport massique de l'oxyde métallique sur le matériau actif est de (0,5 à 10) :(30 à 100) ;
(5) un rapport massique de l'amplificateur de conductivité sur le matériau actif est de (0,01 à 15) :(50 à 100) ;
(6) l'amplificateur de conductivité présente une conductivité de 10⁰ S/m à 10⁸ S/m ;
(7) l'amplificateur de conductivité se présente sous une forme d'une feuille et/ou une bande ;
(8) l'amplificateur de conductivité présente un rapport d'aspect de 2 à 5000 ; et
(9) l'amplificateur de conductivité comprend au moins un élément parmi un matériau d'alliage et un carbone conducteur.

13. Procédé de préparation selon la revendication 9, **caractérisé en ce que**, avant de soumettre le précurseur à un traitement thermique primaire, le procédé de préparation comprend en outre la soumission du précurseur à un traitement de densification de telle sorte que l'agrégat possède une porosité ≤ 10 % et une dureté résistante à la pression ≥ 100 MPa, et le procédé de préparation comprend au moins l'une des caractéristiques suivantes (1) à (5) :
(1) le traitement de densification comprend au moins un processus parmi un processus de fusion, un processus de mélange, un processus de moulage, un processus de pression isostatique, et un processus d'imprégnation ;
(2) le traitement de densification comprend au moins un processus parmi un processus de fusion, un processus de mélange, un processus de moulage, un processus de pression isostatique, et un processus d'imprégnation, où le processus de fusion est une fusion mécanique.
(3) le traitement de densification comprend au moins un processus parmi un processus de fusion, un processus de mélange, un processus de moulage, un processus de pression isostatique, et un processus d'imprégnation, où le processus de fusion est une fusion mécanique et une vitesse de rotation de la machine de fusion utilisée pour la fusion mécanique est de 500 t/min à 3000 t/min ;
(4) le traitement de densification comprend au moins un processus parmi un processus de fusion, un processus de mélange, un processus de moulage, un processus de pression isostatique, et un processus d'imprégnation, où le processus de fusion est une fusion mécanique, et une largeur d'espace de pale de la machine de fusion utilisée pour la fusion mécanique est de 0,01 cm à 0,5 cm ; et
(5) le traitement de densification comprend au moins un processus parmi un processus de fusion, un processus de mélange, un processus de moulage, un processus de pression isostatique, et un processus d'imprégnation, où le processus de fusion est une fusion mécanique, et une durée de la fusion mécanique est d'au moins 0,5 h.

14. Batterie lithium-ion, **caractérisée en ce que** la batterie lithium-ion comprend un matériau d'anode selon l'une quelconque des revendications 1 à 8, ou un matériau d'anode préparé par le procédé de préparation selon l'une quelconque des revendications 9 à 13.
